# EUROPEAN PATENT SPECIFICATION

(11) **EP 4 363 715 B1**
(45) Date of publication and mention of the grant of the patent: **29.07.2026**
(21) Application number: 22737741.3
(22) Date of filing: 24.06.2022
(51) Int. Cl.: F03D 13/10, F03D 13/20

(54) **A SEGMENTED WIND TURBINE TOWER SECTION AND METHOD OF ASSEMBLING SAME**
SEGMENTIERTER WINDTURBINENTURMABSCHNITT UND VERFAHREN ZUR MONTAGE DAVON
SECTION DE TOUR D'ÉOLIENNE SEGMENTÉE ET SON PROCÉDÉ D'ASSEMBLAGE

(30) Priority: 30.06.2021 DK PA202170336
(43) Date of publication of application: 08.05.2024
(73) Proprietor: VESTAS WIND SYSTEMS A/S, 8200 Aarhus N (DK)
(72) Inventor: SØRENSEN, René Kvist, 8200 Aarhus N (DK); JOHANSEN, Rasmus Sanderhoff, 8200 Aarhus N (DK); BROE, Christine, 8200 Aarhus N (DK); CHRISTOPHERSEN, Jacob, 8200 Aarhus N (DK); MADSEN, Rasmus Bøgelund, 8200 Aarhus N (DK)
(74) Representative: Vestas Patents Department
(86) International application number: PCT/DK2022/050144
(87) International publication number: WO 2023/274480

(56) References cited:
- EP-A1- 2 886 751
- EP-A1- 3 483 430
- EP-B1- 2 006 471
- EP-B1- 3 208 404

## Description

### Technical Field

This invention relates generally to wind turbines, and more particularly to a method of assembling a sectional wind turbine tower where at least one of the tower sections includes a segmented tower section having a plurality of tower segments connected edge-to-edge to form an assembled tower section.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator. Wind turbines may be located either on a land mass or within a body of water.

The tower of a wind turbine is typically assembled from multiple tower sections positioned one on top of the other end-to-end to form the tower. In one arrangement, a tower may include a lower tower section, one or more middle tower sections, and an upper tower section. During assembly, the lower tower section may be secured to a foundation of some sort (e.g., an anchor cage for on-shore wind turbines or a pile or platform for off-shore wind turbines), the one or more middle tower sections may be lifted onto the top of the lower tower section, and then the upper tower section may be lifted onto the top of the uppermost middle tower section. Finally, the nacelle may be lifted onto the top of the upper tower section. A lifting device, such as a crane, may be used to lift the tower sections and nacelle into place.

The different tower sections are often made off-site and then transported to the installation site for the wind turbine where the tower sections are assembled (stacked) to form the tower. Each of these tower sections is generally tubular with a circular cross section and includes mounting interfaces, such as flanges, at opposing ends of the section. The mounting interfaces are configured to be connected (typically with bolts) to the foundation or an adjacent tower section to assemble the tower. During operation of the wind turbine, the bending loads in the tower are largest at the bottom of the tower and decrease along the height of the tower with the bending loads being the smallest towards the top of the tower. To accommodate this bending load distribution, the tower may be conically shaped with the lowest tower section having the largest diameter and the highest tower section having the smallest diameter.

As the size of the wind turbines increase, the size of the lower tower sections has to increase to accommodate increased bending loads. There becomes a point where a tubular tower section made off-site is too large in diameter to be transported to the wind turbine installation site as a whole. For example, the network of roads for on-shore wind turbines have limitations including free height under bridges and tunnels, turning radii of curves and bends, weight limitations of certain roads, etc. that make the transport of large wind turbine tower sections impractical. Accordingly, to overcome such limitations, some manufacturers have turned to segmented wind turbine tower sections, wherein a tower section is formed by a plurality of tower segments which are coupled edge-to-edge to form the tower section. This allows large tower sections to be transported to the wind turbine installation site as separate segments, such as 4, 6, 8 or 10 segments, and then assembled at the installation site to form the tower sections. Additionally, to improve strength, the segmented tower sections may include a polygonal cross-sectional profile as compared to the more conventional circular cross-sectional profile.

The assembly of segmented tower sections is labour and time intensive compared to a non-segmented tubular tower section manufactured off-site. In this regard, the tower segments are generally lifted by a crane and assembled together in a serial manner. For example, a first tower segment may be erected on an assembly platform. Then each subsequent tower segment may be positioned adjacent an edge of the preceding tower segment and manually attached along the confronting vertical side edges by bolts or other fasteners. By way of example, the confronting side edges may include respective vertical flanges and the fasteners arranged to connect the vertical flanges from the two adjacent tower segments. Alternatively, the vertical flanges may be omitted, and splice plates may be used to connect adjacent tower segments at abutting or nearly abutting vertical side edges using bolts or other fasteners, for example. The fasteners are typically inserted into the flanges/splice plates when the tower segments are in their erected, upright positions. Accordingly, assembly personnel have to work at significant heights about the assembly platform. The process typically requires a large number of fasteners, and the labour and costs for manually inserting the fasteners is appreciable, especially when performed at significant heights above the assembly platform. Moreover, as the assembly of segmented tower sections is carried out at the wind turbine installation site, that assembly process is often subject to adverse conditions, including high winds, for example, Accordingly, significant effort goes into adequately supporting the tower segments on the assembly platform in their upright position during assembly, which adds further complexity, cost, and time to the assembly process.

Accordingly, manufacturers continually seek improvements to the assembly of segmented wind turbine tower sections at wind turbine installation sites. More particularly, there is a need to provide improved support for tower segments during the assembly of a tower section. Additionally, there is a need to simplify the assembly of tower sections from a plurality of tower segments and reduce the cost and time for that assembly.

Documents considered during the patent prosecution are i.a.: EP 2 886 751 A1, EP 3 208 404 B1, EP 3 483 430 A1 and EP 2 006 471 B1.

### Summary

A method of assembling a wind turbine tower section from a plurality of tower segments in accordance with a first aspect of the invention is disclosed in claims 1-6 and initially includes providing the plurality of tower segments to a wind turbine installation site, wherein each tower segment has an upper edge, a lower edge, a first side edge, a second side edge, an inner surface, and an outer surface. The method further includes forming a tower section frame assembly by arranging a first tower segment in a substantially horizontal orientation; arranging a second tower segment in a substantially horizontal orientation and in spaced relation to the first tower segment such that there are at least two discrete gaps between confronting first and second side edges of each side of the first and second tower segments, the gaps being suitable to be filled with one or more remaining tower segments; and the respective inner surfaces of the first and second tower segments face each other; and connecting at least two tower segments with a support beam while the first and second tower segments are in the substantially horizontal orientation, wherein the tower section frame assembly forms a framework on which to further assemble the tower section; arranging the tower section frame assembly on an assembly stand (e.g., as an assembled unit); and attaching the remaining plurality of tower segments to the tower section frame assembly in the gaps to form the tower section.

In one embodiment, arranging the first and second tower segments in the substantially horizontal orientation may further include lifting the first tower segment from one of the side edges to orient the first tower segment in the substantially horizontal position and connecting the first tower segment to a support stand arrangement to maintain the first tower segment in the substantially horizontal orientation, and lifting the second tower segment from one of the side edges to orient the second tower segment in the substantially horizontal position and connecting the second tower segment to the support stand arrangement to maintain the second tower segment in the substantially horizontal orientation. In another embodiment, the method may include connecting one or more roller elements to the other side edge of the first and/or second tower segment from which the segment is being lifted prior to lifting the segment(s).

In one embodiment, arranging the tower section frame assembly on the assembly stand may further include reorienting the tower section frame assembly to be in a substantially vertical orientation and connecting a lower end of the tower section frame assembly to the assembly stand. In a further embodiment, the method may include connecting one or more tensioning elements between the tower section frame assembly and the assembly stand to provide additional support. In this embodiment, reorienting the tower section frame assembly may further include lifting an upper end of the tower section frame assembly and allowing the lower end of the tower section frame assembly to translate as the upper end of the tower section frame assembly is being lifted. In another embodiment, the lower end of the tower section frame assembly may simply pivot about a pivot axis without translating along the ground.

In one embodiment, attaching the remaining plurality of tower segments to the tower section assembly stand may further include lifting each of the remaining plurality of tower segments from an upper edge to orient each of the remaining plurality of tower segments in a substantially vertical orientation and connecting each of the remaining plurality of tower segments to an adjacent tower segment that forms or is connected to the tower section frame assembly. In a further embodiment, the method may include connecting one or more roller elements to a lower end of each of the remaining plurality of tower segments prior to lifting.

A second aspect of the invention may be found in claims 7-14.

In one embodiment, the method may include connecting the first splice plate to the tower segment when the tower segment is in a substantially horizontal orientation; connecting the second splice plate to the adjacent tower segment when the adjacent tower segment is in a substantially horizontal orientation; and orienting the tower segment and the adjacent tower segment in a substantially vertical orientation prior to arranging the adjacent tower segment relative to the tower segment. Moreover, the method may include connecting the tower segment to an assembly stand and connecting the adjacent tower segment to the assembly stand after arranging the adjacent tower segment relative to the tower segment.

In one embodiment, the method may include providing the plurality of tower segments to the wind turbine installation site as one or more stacks of tower segments and connecting the first splice plate to the tower segment and connecting the second splice plate to the adjacent tower segment prior to the tower segment and adjacent tower segment being removed from the one or more stacks of tower segments. In a further embodiment, the method may include transporting the one or more stacks of tower segments from a manufacturing facility to the wind turbine installation site, wherein connecting the first splice plate to the first side edge of the tower segment and connecting the second splice plate to the second side edge of the adjacent tower segment are performed prior to transporting the one or more stacks of tower segments to the wind turbine installation site. In one embodiment, the one or more stacks of tower segments may be transported to the wind turbine installation site in one or more shipping containers.

In another embodiment, the method includes using the first and second splice plates as guides when arranging the adjacent tower segment relative to the tower segment. This makes it easier to align the two adjoining tower segments during assembly.

In addition to connecting one or more splice plates along the vertical side edges of the tower segments, the method may include connecting one or more splice plates (e.g., horizontal splice plates) to extend along the upper edge of the tower segments. In one embodiment, the horizontal splice plates may be connected to the tower segments while the tower segments are on the ground in their one or more stacks. Alternatively, the horizontal splice plates may be connected to the tower segments at the manufacturing facility and then transported to the wind turbine installation site.

In a third aspect of the invention that may be found in claims 15 and 16, a method of assembling a wind turbine tower from a plurality of tower sections is also disclosed. The method includes assembling a first segmented tower section from a first plurality of tower segments and a second segmented tower section from a second plurality of tower segments, wherein each of the first and second segmented tower sections is assembled in accordance with the first and/or second aspect described above. The method further includes connecting the first and second segmented tower sections end-to-end to form the tower or a portion of the tower. In one embodiment, the method may further include connecting one or more tubular tower sections to the first or second segmented tower section to form the wind turbine tower.

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a front partial perspective view of a wind turbine having hybrid wind turbine tower in accordance with an aspect of the invention;
Fig. 2 is a cross-sectional view of a segmented tower section in the wind turbine tower of Fig. 1;
Fig. 3 illustrates a plurality of tower segments being transported to a wind turbine installation site in a shipping container;
Fig. 4 is a perspective view of an assembly platform used to assemble a segmented tower section in accordance with an embodiment of the invention;
Fig. 5 is a perspective view of a support stand arrangement for forming a tower section frame assembly in accordance with an embodiment of the invention;
Fig. 6 is an enlarged perspective view illustrating a pivot stand in the support stand arrangement illustrated in Fig. 5;
Fig. 7 is a perspective view illustrating the removal of a tower segment from a stack of tower segments in accordance with an embodiment of the invention;
Fig. 8 is a perspective view of a tower section frame assembly being positioned on an assembly platform as an assembled unit in accordance with an embodiment of the invention;
Fig. 9 is a perspective view illustrating the removal of a tower segment from a stack of tower segments in accordance with an embodiment of the invention;
Fig. 10 is a perspective view illustrating the attachment of tower segments to the tower section frame assembly shown in Fig. 8;
Fig. 11 is a cross-sectional view of a connection joint between adjacent tower segments having splice plates preinstalled thereon in accordance with an embodiment of the invention;
Fig. 12 is a front view illustrating the connection of splice plates to a tower segment in accordance with an embodiment of the invention;
Fig. 13 is an end view illustrating a stack of tower segments having splice plates connected to the edges thereof in a specific pattern corresponding to the order the tower segments are assembled;
Figs. 14A-14C are top views illustrating the assembly to the segmented tower section in accordance with an embodiment of the invention;
Figs 15A and 15B are perspective views of assembling a plurality of segmented tower sections to form the wind turbine tower illustrated in Fig. 1; and
Fig. 16 is a front view illustrating the inclusion of horizontal splice plates on the tower segments in accordance with an embodiment of the invention.

### Detailed Description

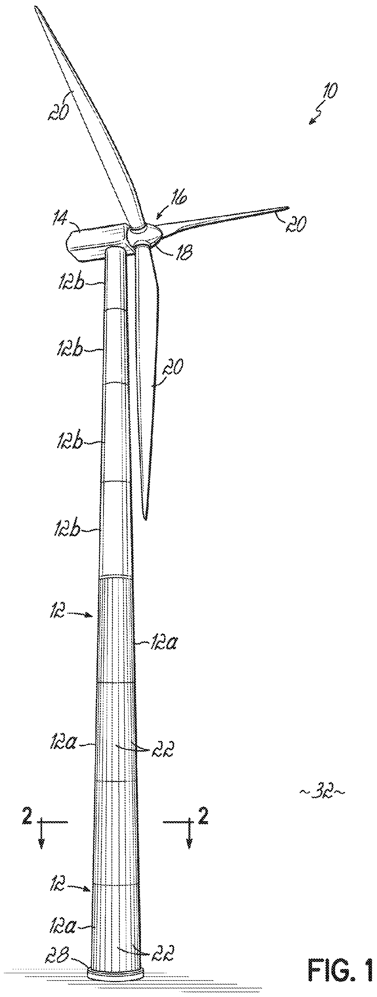

With reference to Fig. 1, a wind turbine 10 includes a tower 12, a nacelle 14 disposed at the apex of the tower 12, and a rotor 16 operatively coupled to a generator (not shown) housed inside the nacelle 14. In addition to the generator, the nacelle 14 houses miscellaneous components required for converting wind energy into electrical energy and various components needed to operate, control, and optimize the performance of the wind turbine 10. The tower 12 supports the load presented by the nacelle 14, the rotor 16, and other components of the wind turbine 10 that are housed inside the nacelle 14 and also operates to elevate the nacelle 14 and rotor 16 to a height above ground level or sea level, as may be the case, at which faster moving air currents of lower turbulence are typically found.

The rotor 16 of the wind turbine 10, which is represented as a horizontal-axis wind turbine, serves as the prime mover for the electromechanical system. Wind exceeding a minimum level will activate the rotor 16 and cause rotation in a plane substantially perpendicular to the wind direction. The rotor 16 of wind turbine 10 includes a central hub 18 and at least one blade 20 that projects outwardly from the central hub 18 at locations circumferentially distributed thereabout. In the representative embodiment, the rotor 16 includes three blades 20, but the number may vary. The blades 20 are configured to interact with the passing air flow to produce lift that causes the central hub 18 to spin about a longitudinal axis.

The wind turbine 10 may be included among a collection of similar wind turbines belonging to a wind farm or wind park that serves as a power generating plant connected by transmission lines with a power grid, such as a three-phase alternating current (AC) power grid. The power grid generally consists of a network of power stations, transmission circuits, and substations coupled by a network of transmission lines that transmit the power to loads in the form of end users and other customers of electrical utilities. Under normal circumstances, the electrical power is supplied from the generator to the power grid as known to a person having ordinary skill in the art.

As illustrated in Fig. 1, the wind turbine tower 12 may include a plurality of tower sections 12a, 12b stacked one on top of the other and connected at their horizontal ends to collectively form the tower 12. The figure illustrates eight tower sections 12a, 12b but the number may be more or less than this value in alternative embodiments. To accommodate the large bending loads at the lower end or base of the tower 12, one or more tower sections 12a adjacent the base of the tower 12 may have a segmented design that, when assembled, provides a tower section 12a having a diameter which exceeds that which can be reasonably transported over the existing network of roads. In this regard, each of the one or more tower sections 12a may be formed by a plurality of tower segments 22 arranged one next to the other and connected at their vertical side edges to collectively form the tower section 12a. Along the upper portion of the tower 12, the tower sections 12b are generally subject to lower bending stresses and thus may be smaller in size (e.g., diameter) and more conducive for transport over the existing network of roads. Accordingly, these tower sections 12b may not be segmented, but may have a traditional tubular design that can be, for example, transported to a wind turbine installation site in one piece and in a manner generally known in the wind turbine art. Thus, the wind turbine tower 12 shown in Fig. 1 may be of a hybrid design including one or more tower sections 12a having a segmented design and one or more tower sections 12b having a traditional tubular design. Aspects of the invention are not, however, limited to the hybrid tower 12 illustrated in Fig. 1, but may provide benefits to any wind turbine tower having at least one segmented tower section.

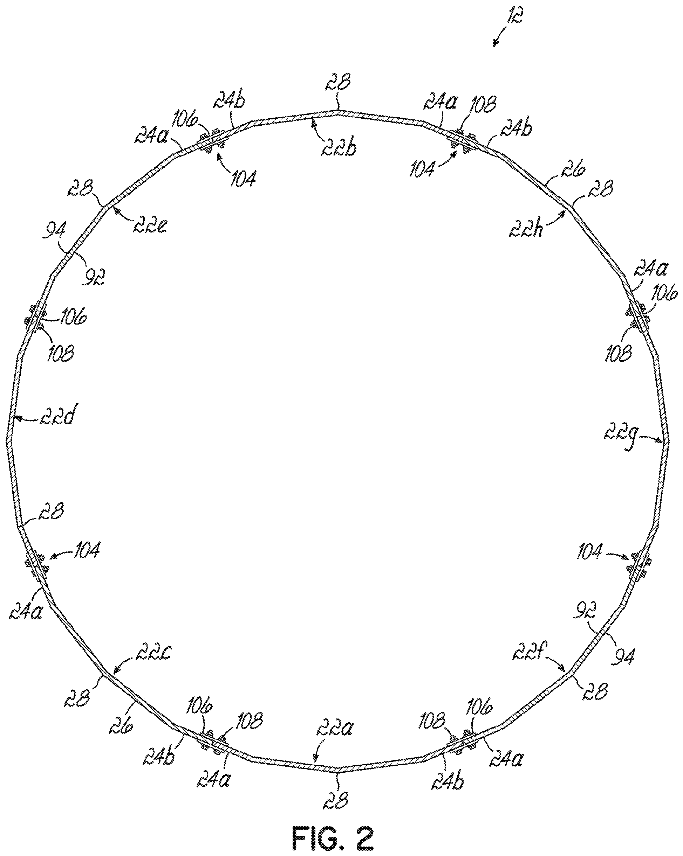

Fig. 2 illustrates a cross-sectional view of one of the segmented tower sections 12a. As illustrated in this figure, in an exemplary embodiment, the tower section 12a may be formed from eight tower segments 22 that are joined along vertical side edges 24a, 24b to the vertical side edges 24b, 24a, respectively, of adjacent tower segments 22. While Fig. 2 illustrates the tower section 12a being formed from eight tower segments 22, it should be understood that the number of tower segments 22 in the tower section 12a may be more or less than this value in alternative embodiments. In an exemplary embodiment, when the plurality of tower segments 22 are joined together along their respective vertical side edges 24a, 24b, the tower section 12a may have a polygonal cross-sectional profile. This is in contrast to the traditional tower sections 12b, which typically have circular cross-sectional profiles. By way of example and without limitation, in one embodiment (not shown), each tower segment 22 may be generally planar and configured such that each tower segment forms one side of the polygonal cross section. In another embodiment, however, each tower segment 22 may be generally non-planar and include two or more generally planar bent panels 26 formed about one or more generally vertical bend lines 28 in the tower segment 22. In one embodiment, each tower segment 22 may include four panels 26 formed about three bend lines 26. For example, in the embodiment shown in Fig. 2, the segmented tower section 12a has a twenty-four-sided polygonal cross-sectional profile. It should be recognized, however, that the number of bend lines 28 and panels 26 in a tower segment 22 may vary to provide a polygonal cross-sectional profile with the desired number of sides.

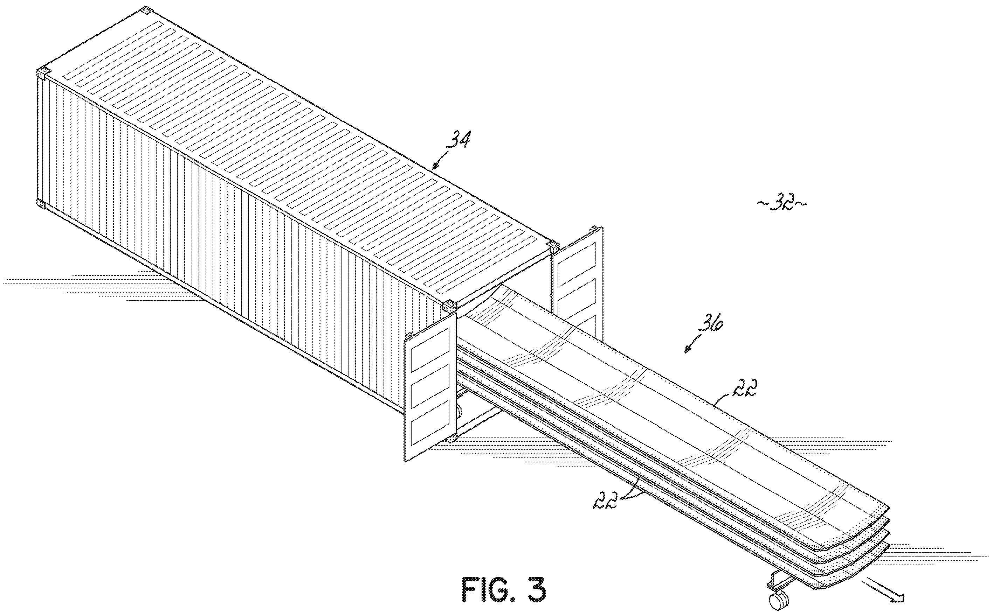

As noted above, one of the benefits of a segmented tower section 12a is that the tower section may be transported to a wind turbine installation site 32 (see Fig. 1) in pieces and then assembled on site to form the tower section 12a. In an exemplary embodiment, and as illustrated in Fig. 3, the length of the panels 22 of the segmented tower section 12a may be selected such that the tower section 12a may be transported to the wind turbine installation site 32 in one or more shipping containers 34. In this regard, a plurality of tower segments 22 may be arranged in a vertical stack 36 (e.g., four or more high) and loaded into the one or more shipping containers 34 for transport to the installation site 32. By way of example and without limitation, the segmented tower section 12a may require two shipping containers 34, with each container 34 carrying a stack of four of the eight tower segments 22. Those of ordinary skill in the art will understand how to arrange the tower segments 22 in a stack 36, and how to load the stacks 36 into their respective shipping containers 34. Those of ordinary skill in the art will further understand how to remove the stacks 36 of tower segments 22 from the shipping containers 34 once they arrive at the wind turbine installation site 32. Accordingly, for sake of brevity a more detailed description of these steps will not be provided herein. It should be understood that the length of the tower segments 22 may be greater than that of a shipping container 34 and transported to an installation site 32 by truck, rail, or other means known to those of ordinary skill in the art.

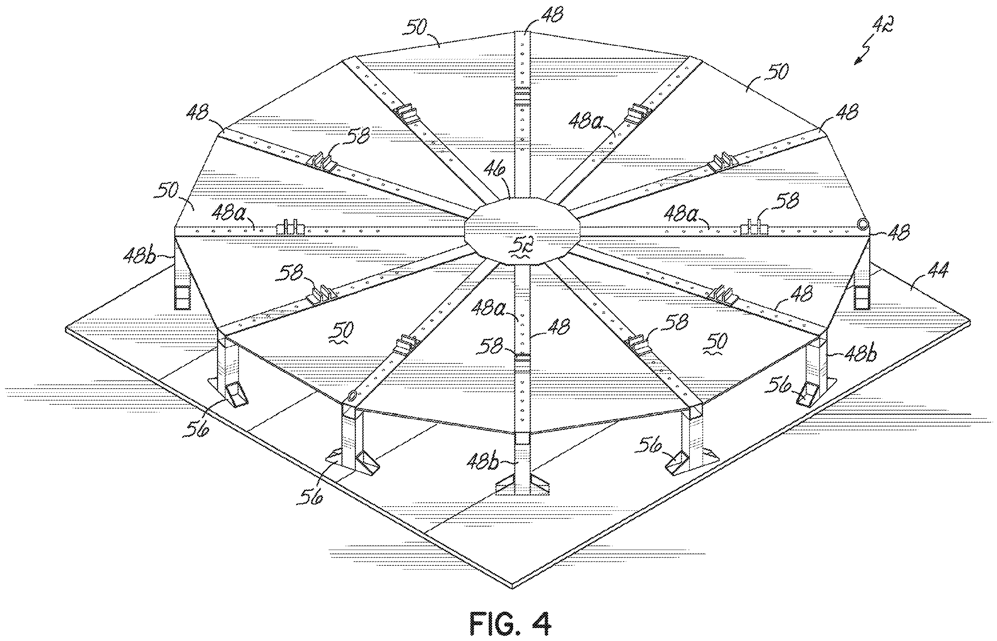

One aspect of the present invention is directed to an improved method for assembling the plurality of tower segments 22 to form the tower section 12a. That method will now be described in detail. As an initial matter and as illustrated in Fig. 4, an assembly platform 42 may be assembled and used to aid in assembling the segmented tower section 12a. In this regard, because the terrain at the wind turbine installation site 32 may be rough, a series of plates 44, such as steel plates, may be arranged on the ground to provide a suitable surface on which to assemble the tower section 12a. In an exemplary embodiment, the assembly platform 42 includes a central hub 46, a plurality of legs 48 extending from the central hub 46, and a plurality of stand plates 50. The central hub 46 may be placed in a central region of the plates 44 and includes a polygonal disc 52 and a plurality of legs (not shown) extending from a lower side of the polygonal disc 52. The lower end of the legs may include shoes (not shown) and the legs may be adjustable relative to the polygonal disc 52 to vary the height of the polygonal disc 52 relative to the support plates 44. The polygonal disc 52 may have an escape hatch (not shown) to allow personnel to exit after the tower section 12a is completed.

The legs 48 are generally L-shaped and include a first elongated strut 48a having a first end that couples to a sidewall of the polygonal disc 52, such as by bolts or other fasteners, and which extends radially outward from the polygonal disc 52. A second strut 48b, and typically much shorter strut, is coupled to the opposite end of the first strut 48a. In one embodiment, the second strut 48b may be permanently connected to the end of the first strut 48a, such as through welding. In an alternative embodiment, the second strut 48b may be attached to the end of the first strut 48a through bolts or other removable fasteners. The lower ends of the second struts 48b may include shoes 56, and the second struts 48b may be adjustable relative to the first struts 48a to vary the height of the legs 48 relative to the support plates 44. The legs 48 may be adjusted in height such that the upper surface of the polygonal head 52 and the upper surface of the legs 48 form a level surface or platform on which to assemble the segmented tower segment 12a. The stand plates 50 are generally planar, plate-like sheets that fit between adjacent legs 48 of the assembly platform 42. In this regard, the stand plates 50 may have a triangular or trapezoidal shape so as to substantially fill the space between adjacent legs 48. The stand plates 50 may be arranged to attach to the side walls of the first struts 48a so that an upper surface of the stand plates 50 is substantially flush with or just slightly below the upper surface of the legs 48.

Each of the legs 48 includes a claw 58 for securing a lower end of the segmented tower section 12a to the assembly platform 42. In one embodiment, the claws 58 may be clamping devices having a fixed clamping plate adjustably spaced from a movable clamping plate (not shown). As explained in more detail below, once the lower end of the segments 22 of the tower section 12a are placed on the assembly platform 42, the movable plate of the clamping device may be adjusted relative to the fixed plate to clamp the tower segment 22 to the assembly platform 42. The clamping device may also include one or more pins that extend through bores in the lower end of the tower segments 22. This is just one configuration of the claws 58 and other devices may also be used to secure the lower end of the tower segments 22 to the assembly platform 42. In an exemplary embodiment, the claws 58 may be adjustable along the upper surface of the legs 48 so as to accommodate segmented tower sections 12a of different diameters. By way of example and without limitation, in one embodiment (not shown), the claws 58 may be attached to the legs 48 by a rail that allows the claws 58 to slide along the upper surface of the legs 48. Alternatively, the upper surface of the legs 48 may include a plurality of bores along the length of the legs 48 that allow the claws 58 to be connected to the legs 48, such as with bolts or other fasteners, at a plurality of different (radial) positions.

With the assembly platform 42 assembled and arranged to receive the tower segments 22 of the tower section 12a (e.g., the legs 48 levelled, the claws 58 positioned appropriately on the legs 48 for the size of the tower section 12a, etc.), the tower segments 22 may be positioned on the assembly platform 42 for assembly. In one aspect of the invention, the assembly process for the tower segments 22 involves first working with a group of tower segments 22 and positioning the group of tower segments 22 on the assembly platform 42 together as an assembled unit. This is in contrast to the more conventional approach of working with each tower segment 22 of the tower section 12a individually during the assembly process (i.e., assembling the segmented tower section 12a one segment at a time). As mentioned above, one of the issues in conventional assembly processes is the extent to which manufacturers go to support the tower segments as they are being assembled together to form the tower section, especially when being erected in adverse conditions. In accordance with an aspect of the invention, the support of the tower segments 22 during the assembly of the tower section 12a is achieved by initially placing two or more tower segments 22 on the assembly platform 42 together, i.e., as an assembled unit and not as individual tower segments. More particularly, the two or more tower segments 22 may be braced together so as to form a generally self-supporting framework to which the remaining tower segments may be attached to form the tower section 12a. This approach simplifies the assembly process and addresses the support issue during assembly in a relatively easy-to-implement and straight-forward manner.

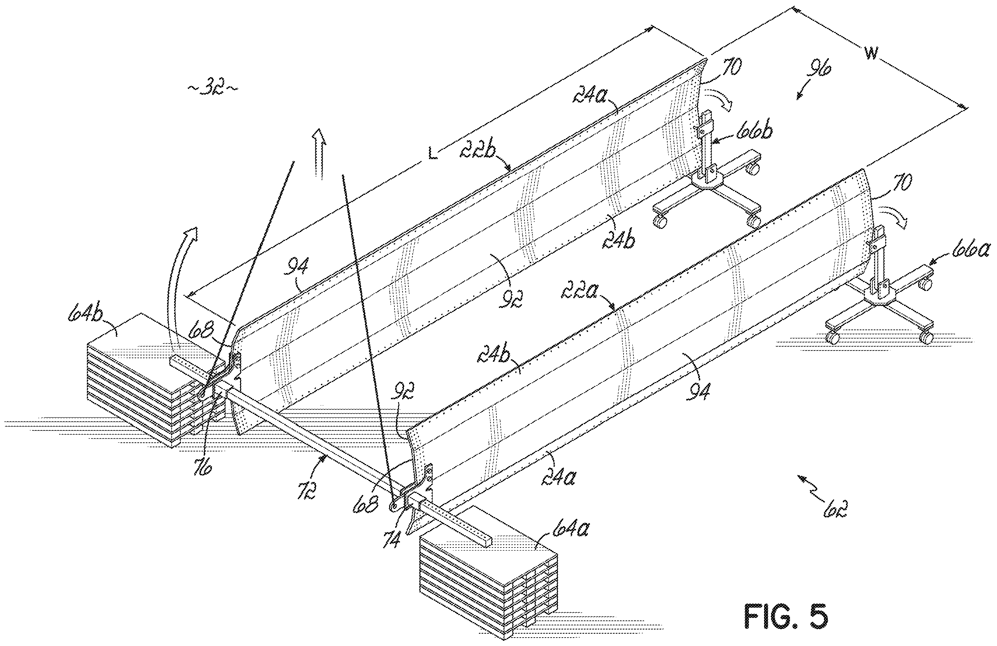

To create this initial framework, a support stand arrangement 62 is provided at the wind turbine installation site 32. In an exemplary embodiment and as illustrated in Fig. 5, the support stand arrangement 62 includes a first pair of stands 64a, 66a and a second pair of stands 64b, 66b arranged in a generally rectangular pattern. The first pair of stands 64a, 66a is configured to support a first segment 22a of the segmented tower section 12a and the second pair of stands 64b, 66b is configured to support a second segment 22b of the segmented tower section 12a. In one embodiment, the first pair of stands 64a, 66a may be arranged at a predetermined distance L apart from each other. The predetermined distance L is configured to generally correspond to the length L of the tower segment 22a such that the holding stand 64a is configured to be adjacent an upper end 68 of the tower segment 22a, and the pivot stand 66a is configured to be adjacent a lower end 70 of the tower segment 22a. The second pair of stands 64b, 66b may be similarly arranged at a predetermined distance L apart from each other such that the holding stand 64b is configured to be adjacent an upper end 68 of the tower segment 22b, and the pivot stand 66b is configured to be adjacent a lower end 70 of the tower segment 22b. Moreover, the second pair of stands 64b, 66b may be spaced from the first pair of stands 64a, 66a at a predetermined distance W apart from each other. The predetermined distance W is configured to generally correspond to the distance the two tower segments 22a, 22b are spaced from each other in the assembled tower section 12a.

In an exemplary embodiment, the holding stands 64a, 64b may be configured to be static stands, i.e., not intended to move or translate along the ground at the installation site 32. However, the holding stands 64a, 64b may be configured to be adjustable in height, which allows the holding stands 64a, 64b to be usable for tower segments having different sizes. By way of example and without limitation, the holding stands 64a, 64b may each be formed from a stack of support plates, where the number of plates in the stack determine the height of the holding stands 64a, 64b. Alternatively, the holding stands 64a, 64b may be formed from a latticed framework (not shown) sized to support the loads presented by the tower segments 22. Other arrangements for the holding stands 64a, 64b may also be possible.

In an exemplary embodiment, a support beam 72, such as a spreader bar or other structural member, may be supported by or releasably attached to the holding stands 64a, 64b so as to span the distance therebetween and be at an elevated position above the ground at the installation site 32. The support beam 72 includes a first mounting hub 74 configured to attach to the upper end 68 of the first tower segment 22a and a second mounting hub 76 configured to attach to the upper end 68 of the second tower segment 22b. In an exemplary embodiment, the first and second mounting hubs 74, 76 may include a mating flange and one or more pins, bolts, etc. configured to engage with the upper end 68 of the tower segments 22a, 22b, respectively. Other flanges and fasteners may also be used to connect the upper end 68 of the tower segments 22a, 22b to their respective mounting hubs 74, 76 and the invention is not limited to the particular arrangement of the mounting hubs 74, 76 shown and described herein. The mounting hubs 74, 76 may be movably positioned on the support beam 72 in order to accommodate tower sections 12a of different sizes. For example, the support beam 72 may include a plurality of bores extending along the length of the support beam 72, and the mounting hubs 74, 76 may attach to the support beam 72 using bolts or other releasable fasteners at the desired locations. Alternatively, the support beam 72 may have a rail arrangement (not shown) that allows the mounting hubs 74, 76 to slide along the length of the support beam. A locking mechanism (also not shown) may then secure the mounting hubs 74, 76 at the desired locations. For a conical tower section 12a, the mounting hubs are arranged to accommodate the angular alignment of the tower segments 22a, 22b due to the diameter of the finished tower section decreasing from bottom to top.

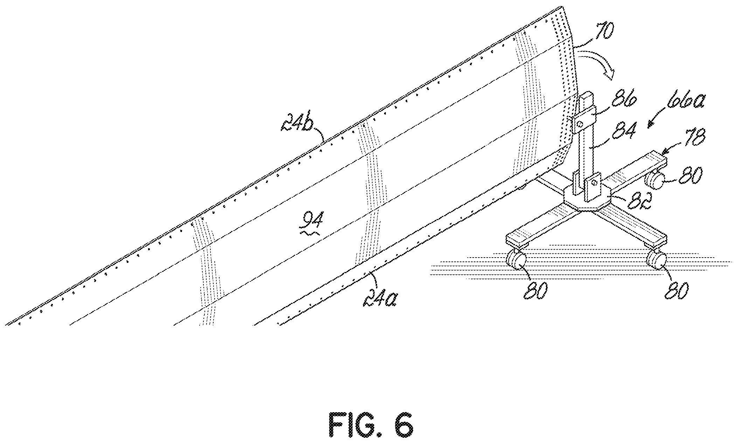

For reasons that will become clear below, in an exemplary embodiment, the pivot stands 66a, 66b are configured to allow pivoting movement of the tower segments 22a, 22b when the tower segments 22a, 22b are connected to the pivot stands 66a, 66b. Moreover, the pivot stands 66a, 66b may be configured to translate along the ground at the installation site 32. Fig. 6 illustrates an exemplary pivot stand, say pivot stand 66a (with pivot stand 66b being substantially identical) in accordance with an embodiment of the invention. The pivot stand 66a, includes a framework 78, such as in a cruciform shape, having a plurality of rollers or wheels 80 attached to a lower part of the framework 78. A support plate 82 is attached to an upper part of the framework 78 (e.g., in the central region of the cruciform shape) to which a mounting plate 84 is pivotally attached. The mounting plate 84 is pivotally movable between an upright, vertical position, where the mounting plate 84 extends upwardly from (e.g., perpendicular to) the support plate 82 and the framework 78, and a folded, horizontal position, where the mounting plate 84 generally extends along or parallel to the support plate 82 and the framework 78. The mounting plate 84 includes one or more brackets 86 (e.g., flanges, pins, fasteners, etc.) for connecting to the lower end 70 of the tower section 22a.

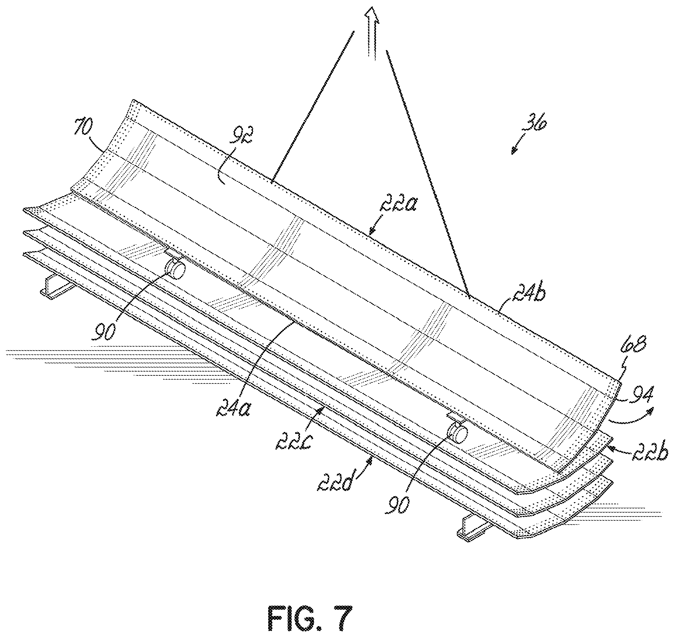

The use of the support stand arrangement 62 to create the initial framework for the tower section 12a will now be explained. After arranging the stands 64a, 64b, 66a, 66b in the generally rectangular configuration described above, a crane (not shown) lifts the first tower segment 22a off of the stack 36 of tower segments 22 removed from the shipping containers 34. Preferably, the tower segments 22 are arranged in the one or more stacks 36 in a particular order corresponding to the order the tower segments 22 are assembled to form the tower section 12a. For example, as illustrated in Fig. 7, the first tower segment 22a may be the top-most tower segment 22 on one of the one or more stacks 36. In any event, the crane may be configured to attach to a side edge 24b of the tower segment 22a and lift so as to orient the tower segment 22a in a substantially horizontal orientation (i.e., a long side edge facing the ground). To avoid damaging the other tower segments 22 in the one or more stacks 36, one or more roller elements 90 (e.g., wheels, rollers, etc.) may be positioned on the other side edge 24a of the tower segment 22a. This allows rolling contact between the two tower segments 22 during the lift of the first tower segment 22a from the one or more stacks 36. The roller elements 90 may be removed once the tower segment 22a is separated from the one or more stacks 36. The crane may then position the first tower segment 22a on the support stand arrangement 62 in the substantially horizontal orientation. For example, while being supported by the crane, the upper end 68 of the tower segment 22a may be attached to the first mount 74 of the support beam 72 and the lower end 70 may be attached to the pivot holder 66a.

Next, the crane may lift the second tower segment 22b off of the stack 36 of tower segments 22. In this regard and in a similar manner, the crane may be configured to attach to a side edge 24a of the tower segment 22b and lift so as to orient the tower segment 22b in a substantially horizontal orientation. To avoid damaging the other tower segments 22 in the one or more stacks 36, one or more roller elements 90 may be positioned on the other side edge 24b of the tower segment 22b. This allows rolling contact between the two tower segments during the lift of the second tower segment 22b from the one or more stacks 36. Again, the roller elements 90 may be removed once the tower segment 22b is separated from the one or more stacks 36. The crane may then position the second tower segment 22b on the support stand arrangement 62 in the substantially horizontal orientation. For example, while being supported by the crane, the upper end 68 of the tower segment 22b may be attached to the second mount 76 of the support beam 72 and the lower end 70 may be attached to the pivot holder 66b.

The first and second tower segments 22a, 22b may be arranged on the support stand arrangement 62 such that the inner surfaces 92 of the tower segments 22a, 22b face toward each other and the outer surfaces 94 face away from each other, as they would in the final assembly of the tower section 12a. While in the above, the upper end 68 of the tower segments 22a, 22b were connected to the support beam 72 while being supported by the crane, in an alternative embodiment, the upper end 68 of the tower segments 22a, 22b may be connected to the holding stands 64a, 64b and the support beam 72 subsequently connected to the upper end 68 of the tower segments 22a, 22b. Thus, the attachment of the tower segments 22a, 22b to the support stand arrangement 62 and support beam 72 may be achieved in different manners and in different orders and should not be limited to the particular process described herein.

The first tower segment 22a, second tower segment 22b, and the support beam 72, when connected together, form a tower section frame assembly 96. Preferably, the tower section frame assembly 96 is formed away from the assembly stand 42 and with the tower segments 22a, 22b in the substantially horizontal orientation. This allows the tower section frame assembly 96 to be relatively easily formed (with technicians being on or close to the ground) and without adverse conditions (e.g., high winds) at the installation site 32 significantly impacting the assembly process. The tower section frame assembly 96 is configured to be generally self-supporting, even when oriented in a substantially vertical orientation. For example, the two tower segments 22a, 22b may be selected so as to be on opposite sides of the tower section 12a when assembled to provide a stable structure. This allows the tower section frame assembly 96 to effectively stand on its own as a structure, which an individual tower segment generally cannot do.

In a next step of the assembly process, the tower section frame assembly 96 may be positioned on the assembly platform 42 (i.e., as an assembled unit and generally self-supporting structure). In this regard, the crane may be connected to the upper end of the tower section frame assembly 96 and lifted. More particularly, in one embodiment, the crane may be connected to the support beam 72, and more particularly the first and second mounts 74, 76, and lifted so as to reorient the tower section frame assembly 96 in a substantially vertical orientation. The crane may be connected to other locations of the support beam 72 or to the first and second tower segments 22a, 22b separately in various alternative embodiments. In any event, as the upper end of the tower section frame assembly 96 is being lifted, the mounting plates 84, to which the lower ends 70 of the tower segments 22a, 22b are attached via brackets 86, rotate from their upright vertical position toward their folded horizontal position, thereby allowing the tower section frame assembly 96 to rotate from a substantially horizontal orientation to a substantially vertical orientation. As noted above, the pivot stands 66a, 66b include rollers or wheels 80. Accordingly, as the upper end of the tower section frame assembly 96 is being lifted, its lower end is permitted to translate along the ground until the lower end is vertically below the upper end in the substantially vertical orientation. In this way, the crane operator need only lift vertically in order to upright the tower section frame assembly 96. In an alternative embodiment of the support stand arrangement 62, the wheels 80 on the pivot stands 66a, 66b may be omitted. Accordingly, the lower end of the tower section frame assembly 94 may no longer be permitted to translate over the ground during the lift (but still provide pivotal movement). In this case, the crane operator will have to move the upper end of the tower section frame assembly 94 toward the lower end during the lift in order to upright the tower section frame assembly 94. While being a more complex lift, it is well within the skill of the ordinary crane operator.

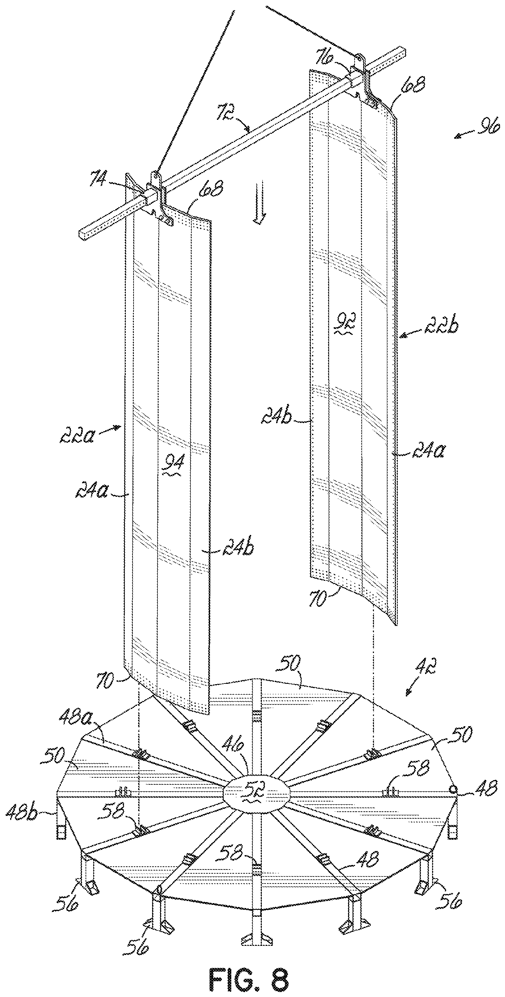

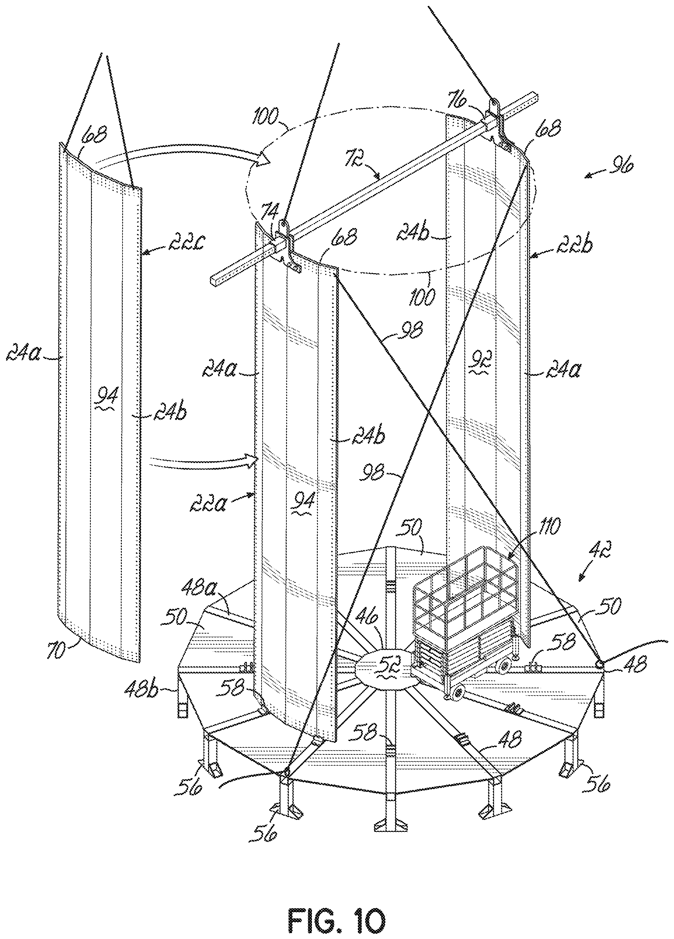

With reference to Fig. 8, with the tower section frame assembly 96 connected to the crane and in the substantially vertical orientation, the crane may move the tower section frame assembly 96 over the assembly platform 42 so that the lower ends 70 of the tower segments 22a, 22b may be connected to one or more claws 58 on the assembly platform 42 to thereby secure the tower section frame assembly 96 to the assembly platform 42. While securement of the tower section frame assembly 96 via the claws 58 may be sufficient, in one embodiment, the tower section frame assembly 96 may be further secured to the assembly platform 42. In this regard, for example, one or more tension members 98 may extend between the tower section frame assembly 96 and the assembly platform 42. For example, as illustrated in Fig. 10, one or more tension members 98 may extend from the upper end 68 of each of the first and second tower segments 22a, 22b to the assembly platform 42. Other arrangements, however, are possible. The tension members 98 may include elongate ropes, cords, cables, chains, rods, struts, etc. capable of carrying tension in the members. Between the self-supporting nature of the tower section frame assembly 96 and the optional additional tension members 98, no further support of the tower segments 22 may be required to assemble the tower section 12a on the assembly stand 42, even under adverse conditions at the wind turbine installation site 32.

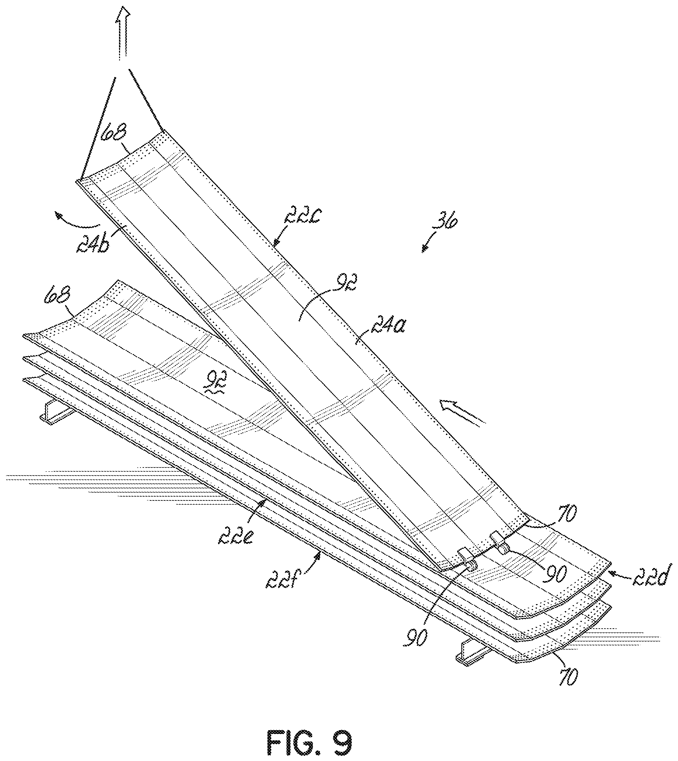

In a next step of the assembly process, the remaining tower segments 22 that form the tower section 12a may be assembled to the tower section frame assembly 96 on the assembly platform 44. In an exemplary embodiment, each of the remaining tower segments 22 may be attached to the tower section frame assembly 96 in a serial manner (i.e., one at a time). In this regard, and as illustrated in Fig. 9, the crane may be configured to attach to an upper end 68 of another tower segment 22c in the one or more stacks 36 and lift so as to orient the tower segment 22c in a substantially vertical orientation (i.e., the lower end 70 facing the ground). To avoid damaging the other tower segments 22 in the one or more stacks 36, one or more roller elements 90 (e.g., wheels, rollers, etc.) may be positioned on the lower end 70 of the tower segment 22c. This allows rolling contact between the two tower segments during the lift of the tower segment 22c from the one or more stacks 36. The roller elements 90 may be removed once the tower segment 22c is separated from the one or more stacks 36.

Because the first and second tower segments 22a, 22b are selected so as to be separate from each other (e.g., and preferably opposite to each other in tower section 12a), the remaining tower segments 22 may be positioned in a space or gap 100 between confronting vertical side edges 24a, 24b of the first and second tower segments 22a, 22b. In the embodiment illustrated in the drawings, there are two discrete gaps 100 between the first and second tower segments 22a, 22b that may be filled with one or more remaining tower segments 22. By way of example and without limitation, three tower segments 22 may fill each of the gaps 100 between the first and second tower segments 22a, 22b. To this end, the crane may move the tower segment 22c over the assembly platform 42 so that the lower end 70 of the tower segments 22c may be connected to one or more claws 58 on the assembly platform 42 to thereby secure the tower segment 22c to the assembly platform 42. The tower segment 22c may be positioned relative to one of the first or second tower segments 22a, 22b such that a vertical side edge of tower segment 22c is in abutting or near abutting relationship to a vertical side edge of one of the first or second tower segments 22a, 22b. In one embodiment, for example, the tower segment 22c is positioned relative the first tower segment 22a such that a vertical side edge 24b of tower segment 22c is in abutting or near abutting relationship to the vertical side edge 24a of the first tower segment 22a.

The abutting or nearly abutting vertical side edges 24a, 24b of adjoining tower segments 22 may be joined to form a connection joint 104 (Fig. 2). In one embodiment, the connection joint 104 may be formed by a plurality of splice plates 106 that extend along the vertical edges 24a, 24b and connect to each of the tower segments 22 which form the connection joint 104. In one embodiment, a splice plate 106 may be positioned on the outer surface 94 of the tower segments 22 that form the connection joint 104. In another embodiment, a splice plate 106 may be positioned on the inner surface 92 of the tower segments 22 that form the connection joint 104. In a preferred embodiment, however, a splice plate 106 may be positioned on the inner and outer surfaces 92, 94 of the tower segments 22 that form the connection joint 104. In this regard, when the vertical side edge 24b of tower segment 22c is in abutting or near abutting relationship to the vertical side edge 24a of the first tower segment 22a, technicians on the inside and outside of the tower segments 22a, 22c may position the respective splice plates 106 and insert fasteners 108 (e.g., nuts/bolts) in order to connect the two tower segments 22a, 22c together along the vertical side edges 24a, 24b to thereby form the connection joint 104. In this regard, a scissor lift 110 or other type of lift may be positioned on the assembly platform 42 to allow technicians to install the splice plate 106 and fasteners 108 along the inside of the segments 22a, 22c. Similarly, a cherry picker (not shown) or other type of lift may be positioned on the ground to allow technicians to install the splice plates 106 and fasteners 108 along the outside of the segments 22a, 22c. When the tower segment 22c is connected to the tower segment 22a, it forms part of the tower section frame assembly 94 and does not require any further securement or support for further assembly of the tower section 12a.

As one can appreciate, a similar process may be used to connect another tower segment 22d to tower segment 22c along confronting vertical side edges 24a, 24b of those two tower segments 22c, 22d. When tower segment 22e is positioned relative to tower segment 22d on the assembly platform 42, it is also positioned relative to tower segment 22b, such that a pair of confronting vertical side edges 24a, 24b exist, one associated with the connection joint 104 between tower segment 22e and 22d, and one associated with the connection joint 104 between tower segment 22e and 22b. Splice plates 106 and fasteners 108 may be used to form the connection joints 104 between these tower segments in the manner generally described above. Tower segments 22c, 22d, and 22e fill one of the gaps 100 between the first and second tower segments 22a, 22b that form the tower section frame assembly 94. The other gap 100 may be filled with tower segments 22f, 22g, and 22h in the order and manner described above for tower segments 22c, 22d, and 22e, respectively. Fig. 2 illustrates the arrangement of the tower segments 22a-22h and the suffixes provide the preferred order of assembly. It should be understood, however, that the tower segments 22 may be assembled in a different order and remain within the scope of the present invention.

In the assembly method discussed above, the connection joint 104 between adjacent tower segments 22 were made with a plurality of splice plates 106, one or more splice plates 106 on the outer surface 94 of the adjoining tower segments 22, and one or more splice plates 106 on the inner surface 92 of the adjoining tower segments 22. In a normal course, splice plates are typically arranged relative to adjoining items after the two items have been arranged relative to each other in abutting or near abutting fashion. Thus, in the above assembly method and in the normal course, the splice plates 106 are not positioned on the inner and outer surfaces 92, 94 of the adjoining tower segments 22 until after the adjoining tower segments 22 are vertically arranged on the assembly platform 42 in abutting or near abutting relationship along confronting edges 24a, 24b. In a further aspect of the present invention, however, an assembly method for a segmented tower section 12a may include preinstalling one or more splice plates 106 on one or more of the tower segments 22 prior to positioning adjoining tower segments 22 next to each other, i.e., prior to positioning adjoining tower segments 22 on the assembly stand 42 in a substantially vertical orientation. It should be understood that the preinstallation of one or more splice plates 106 on one or more tower segments 22 may be used in combination with the assembly method described above (i.e., forming the tower section frame assembly 96 as part of the assembly process) or form an independent aspect of the present invention that may be used in the assembly of most any segmented tower section.

In an exemplary embodiment, the one or more splice plates 106 may be preinstalled on one or more tower segments 22 when the tower segments 22 are on the ground and in a substantially horizontal orientation. In one embodiment, the preinstallation of the one or more splice plates 106 may occur when the tower segments 22 are in the one or more stacks 36 at the installation site 32. For example, the splice plates 106 may be preinstalled when the one or more stacks 36 are removed from the one or more shipping containers 34. In another embodiment, the one or more splice plates 106 may be connected to the one or more tower segments 22 at the manufacturing facility of the tower 12, and the tower segments 22 transported to the wind turbine installation site 32 with the splice plates 106 preinstalled. In either embodiment, when the tower segments 22 are removed from the one or more stacks 36 for positioning on the support stand arrangement 62 (for tower segments 22a, 22b) or the assembly platform 42 (for the remaining tower segments 22c-22h) as described above, the splice plates 106 are already positioned along one or more of the vertical side edges 24a, 24b of the tower segments 22.

The preinstallation of the one or more splice plates 106 may provide several advantages in the assembly of a segmented tower section 12a. For example, the preinstallation of one or more splice plates 106 on a tower segment 22 saves on time and labour at the installation site 32 and reduces the overall time for tower section assembly, which means that the tower 12 may be built more quickly and at lower cost (e.g., for crane rental, labour, etc.). Additionally, the connection of one or more splice plates 106 to one or more tower segments 22 is easier and more efficient in a manufacturing setting instead of under field conditions, which are often harsh. Furthermore, positioning two tower segments 22 next to each other so that confronting edges 24a, 24b are in abutting or near abutting relationship using a crane can be difficult. In another advantage, a preinstalled splice plate 106, such as along one or both of the vertical side edges 24a, 24b may be used as guides when bringing the two adjoining tower segments 22 and their edges 24a, 24b in position next to each other. Thus, the assembly process is simplified.

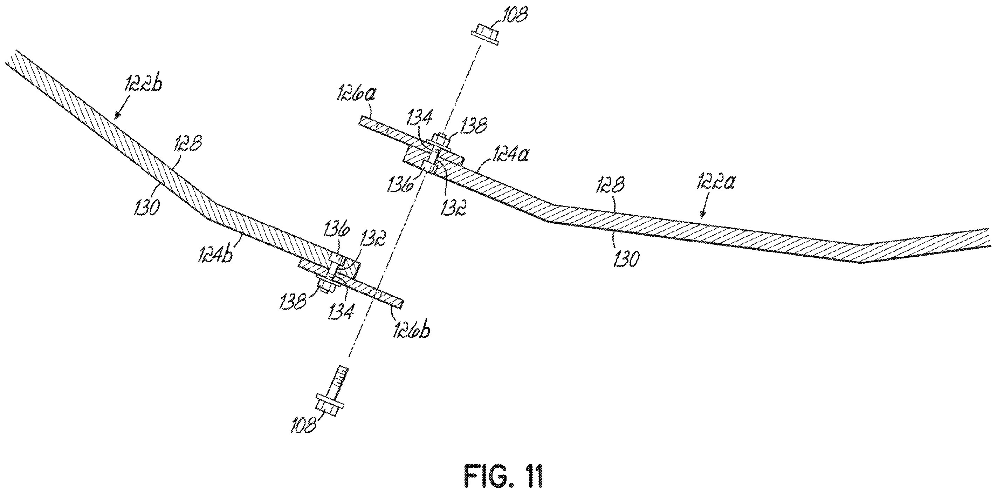

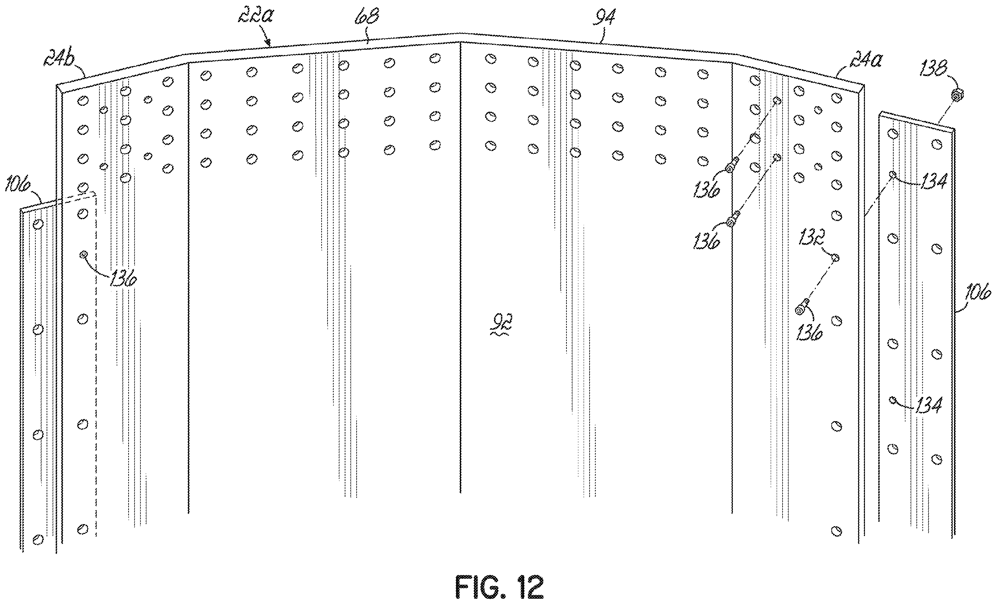

Fig. 11 illustrates the general concept for two adjoining tower segments 122a, 122b being connected at confronting vertical side edges 124a, 124b. For tower segment 122a, a splice plate 126a may be connected along the vertical side edge 124a on the inner surface 128 of the tower segment 122a. For tower segment 122b, a splice plate 126b may be connected along the vertical side edge 124b on the outer surface 130 of the tower segment 122b. Fig. 12 illustrates an arrangement for connecting the splice plates 126a, 126b to their respective tower segment 122a, 122b. More particularly, and as illustrated in this figure, the tower segments 122a, 122b may include bores 132 along the vertical side edges 124a, 124b, and the splice plates 126a, 126b may also include bores 134. The splice plates 126a, 126b may be connected to their respective tower segment 122a, 122b by a fastener, such as a bolt 136 and nut 138. For reasons that will become clear below, the head of the bolts 136 are configured to be countersunk so as not to extend above the surface of the tower segment 122a, 122b. The nut 138, however, may extend above the surface of the splice plates 126a, 126b.

As illustrated in Fig. 11, the splice plates 126a, 126b are configured to be on opposite surfaces of their respective tower segments 122a, 122b and extend beyond their respective vertical side edges 124a, 124b. As such, the splice plates 126a, 126b may be used as guides to aid in aligning the tower segments 122a, 122b as the tower segments 122a, 122b are brought together so that edges 124a, 124b are in abutting or near abutting relationship. When the two tower segments 122a, 122b are brought together, splice plate 126a overlaps tower segment 122b along its inner surface 128 and splice plate 126b overlaps tower segment 122a along its outer surface 130. As illustrated in Fig. 2, fasteners 108 may then be inserted into aligned bores 142, 144 in the tower segments 122a, 122b and splice plates 126a, 126b, respectively, as is generally known in the art.

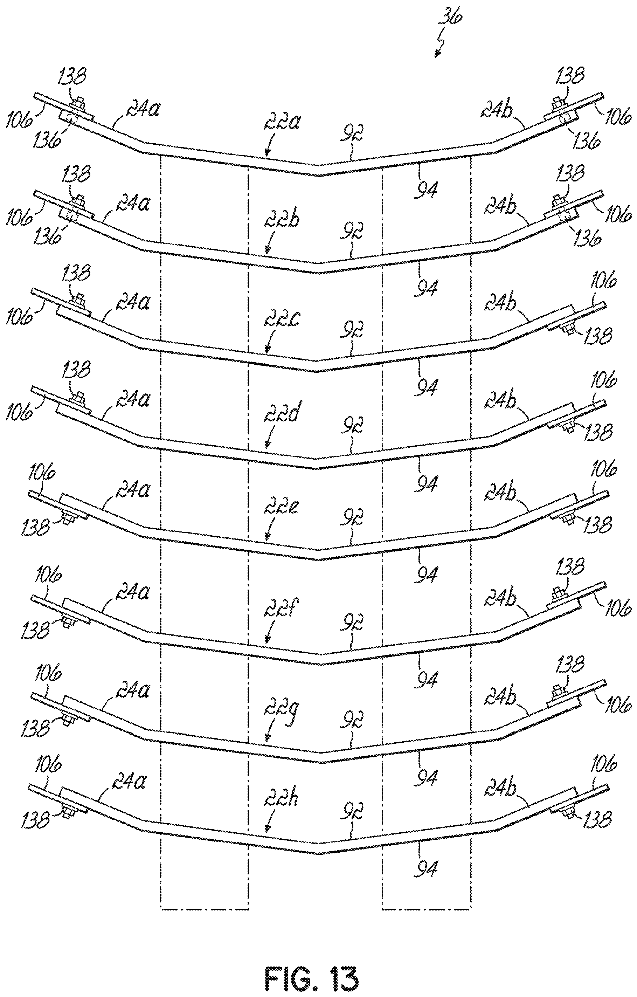

In reference back to the segmented tower section 12a shown in Fig. 2, in one embodiment, splice plates 106 may be preinstalled on both vertical side edges 24a, 24b for each of the tower segments 22a-22h that form the tower section 12a. Given the sequence in which the tower segments 22 are assembled to form the tower section 12a, the splice plates 106 may be attached to the proper surface 92, 94 of the tower segments 22 such that the process illustrated in Fig. 11 can be carried out at a plurality of the connection joints 104 (e.g., such as at each of the connection joints 104). Fig. 13, for example, illustrates a stack 36 of tower segments 22a-22h with the splice plates 106 preinstalled along vertical side edges 24a, 24b of each tower segment 22a-22h. Given the assembly sequence discussed above, the arrangement of the splice plates 106 on each tower segment 22 may be as follows: Tower segment 22a has a splice plate 106 connected to the inner surface 128 along both vertical side edges 24a, 24b; tower segment 22b has a splice plate 106 connected to its inner surface 128 along both vertical side edges 24a, 24b; tower segment 22c has a splice plate 106 connected to its inner surface 128 along vertical side edge 24a and a splice plate 106 connected to its outer surface 130 along vertical side edge 24b; tower segment 22d has a splice plate 106 connected to its inner surface 128 along vertical side edge 24a and a splice plate 106 connected to its outer surface 130 along vertical side edge 24b; tower segment 22e has a splice plate 106 connected to its outer surface 130 along both vertical side edges 24a, 24b; tower segment 22f has a splice plate 106 connected to its outer surface 130 along vertical side edge 24a and a splice plate 106 connected to its inner surface 128 along vertical side edge 24b; tower segment 22g has a splice plate 106 connected to its outer surface 130 along vertical side edge 24a and a splice plate 106 connected to its inner surface 128 along vertical side edge 24b; tower segment 22h has a splice plate 106 connected to its outer surface 130 along both vertical side edges 24a, 24b.

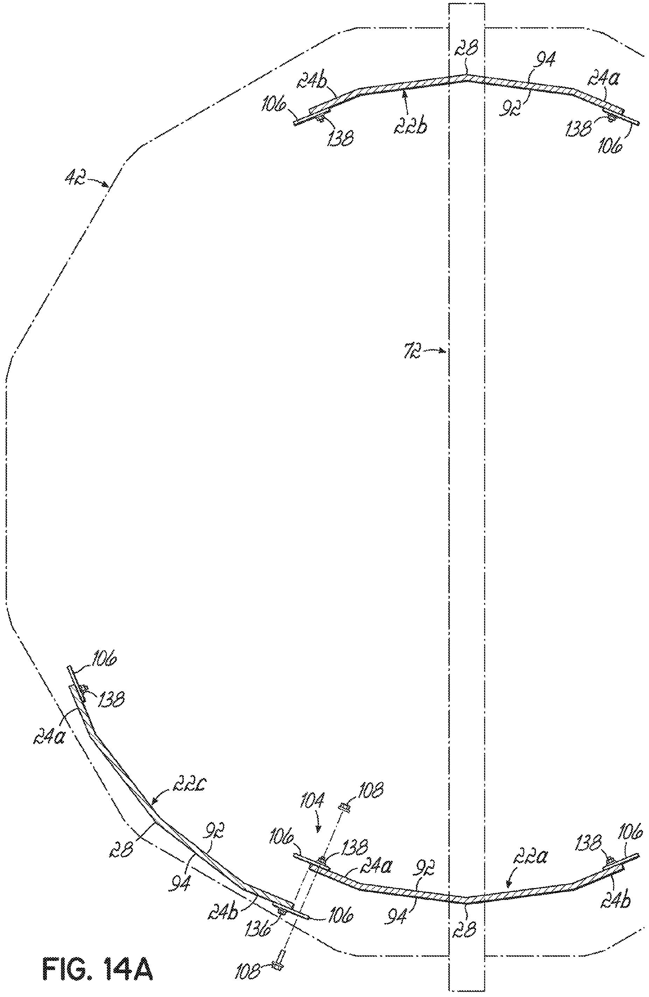

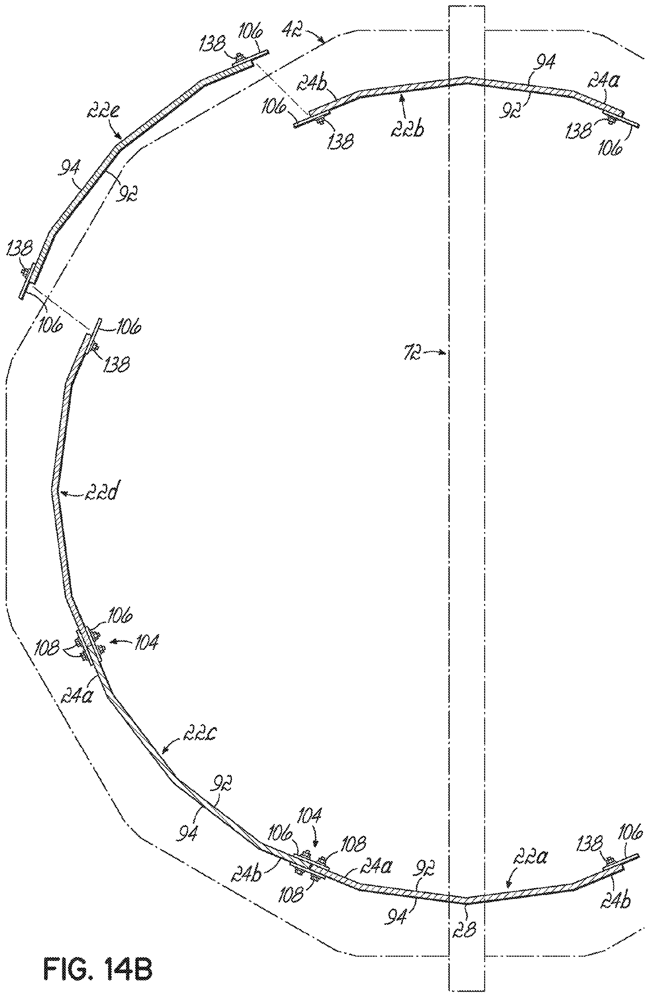

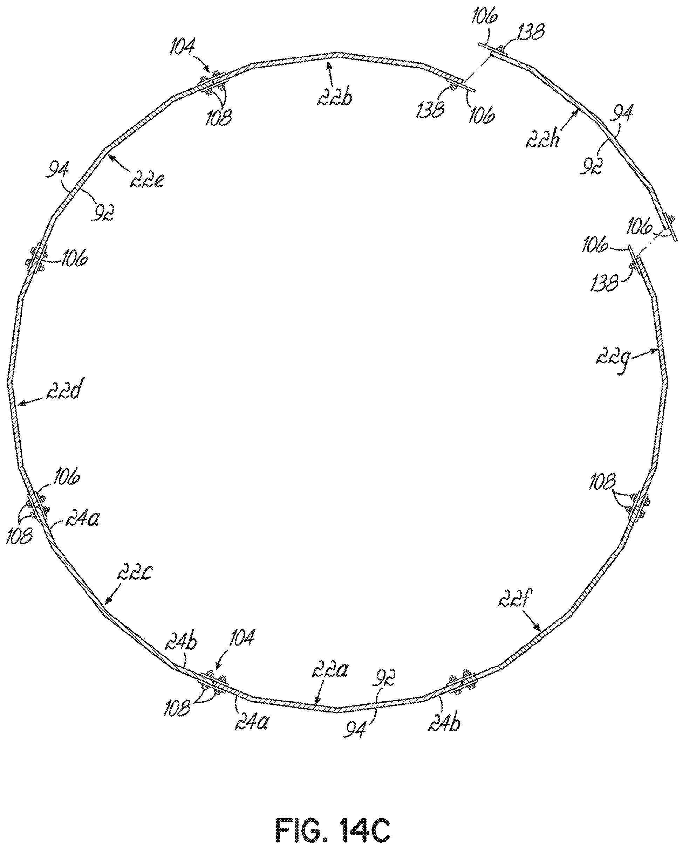

Fig. 14A illustrates tower segments 22a and 22b arranged on the assembly platform 42 and tower segment 22c being moved into position adjacent tower segment 22a. At the illustrated connection joint 104, the splice plates 106 are on opposite surfaces of their respective tower segments 22a, 22c such that the splice plates 106 may operate as guides to help align the two segments 22a, 22c. Moreover, the splice plates 106, and the splice plates 106 may be properly positioned and ready for fasteners when the two tower segments 22a and 22c are brought together along their confronting edges 24a, 24b. As illustrated in Fig. 14B, when tower segment 22e is moved into position, its vertical side edge 24a is configured to confront the vertical side edge 24b of tower segment 22b and its vertical side edge 24b is configured to confront the vertical side edge 24a of tower segment 22d. The splice plates 106 may be arranged such that for each connection joint 104, the splice plates may be connected to opposite surfaces 92, 94 of their respective tower segments. Thus, similar to the above, but now applied to both edges of tower segment 22e, the splice plates 106 may operate as guides to help align the tower segments 22e, 22b and 22e and 22d, and the splice plates 106 may be properly positioned and ready for fasteners after being brought together along their confronting edges 24a, 24b. Fig. 14C illustrates a similar situation for tower segment 22h.

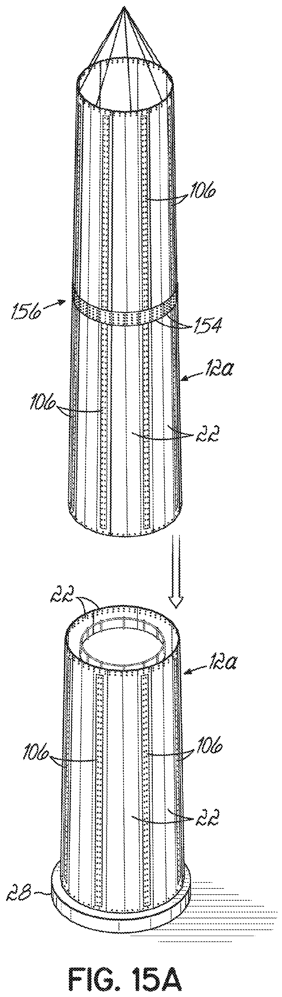

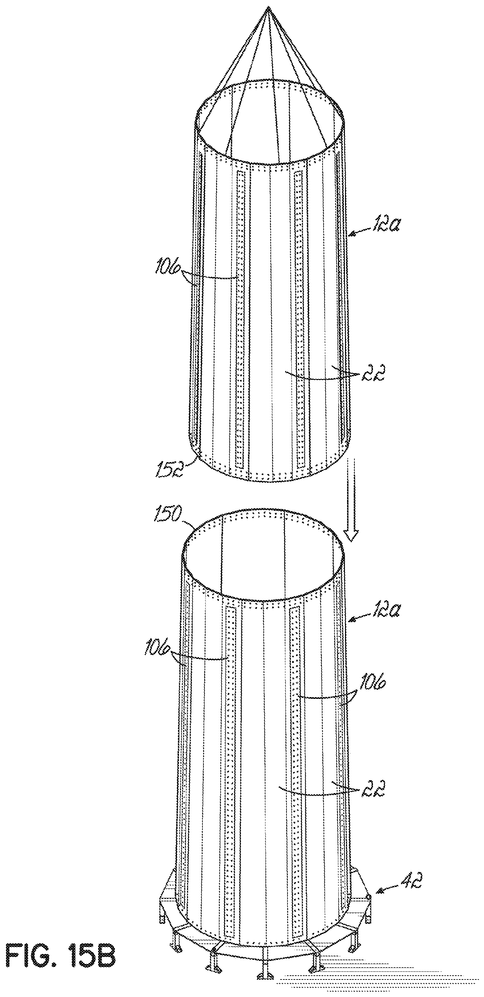

In reference to Fig. 15A, for wind turbine towers having multiple segmented tower sections 12a, such as tower 12 illustrated in Fig. 1, the lowermost tower section 12a may be assembled first and positioned on the foundation 28. This tower section 12a is typically the largest and heaviest section in the tower 12. Accordingly, this section 12a is typically assembled and connected to the foundation 28 by itself. Due to smaller size and weight, in one embodiment, the remaining segmented tower sections 12a may be assembled in pairs. In this regard, the third segmented tower section 12a may be assembled on the assembly platform 42 in the manner described above. When it is completed, that tower segment 12a may be set aside, such as on the ground at the installation site 32, and the second segmented tower section 12a assembled on the assembly platform 42 in the manner described above. Subsequent to its assembly and as illustrated in Fig. 15B, the third segmented tower segment 12a may be lifted, such as with a crane, and positioned atop the second segmented tower section 12a.

The upper end 150 of the second tower section 12a and the lower end 152 of the third tower segment 12a may be connected by a plurality of splice plates 154 along, for example, the inner and outer surfaces of the adjacent tower sections at a horizontal connection joint 156. Connecting two adjacent tower sections 12a while on the ground (or assembly platform 42) allows technicians to work closer to the ground, which is easier than working at heights. When the two tower sections are connected together at the connection joint 156, that sub-assembly may then be lifted by the crane and attached atop the tower section 12a connected to the foundation 28, as illustrated in Fig. 15A. Splice plates 154 may similarly be used to form that horizontal connection joint 156. If the tower 12 calls for two additional segmented tower sections 12a (e.g., 5 segmented tower sections 12a), the same process as described above may be used to form a connected pair of tower sections prior to that pair being assembled to the partially constructed tower 12. In an alternative embodiment, more than one assembly stand 42 may be provided at the wind turbine installation site 32for assembling multiple tower sections 12a at the same time.

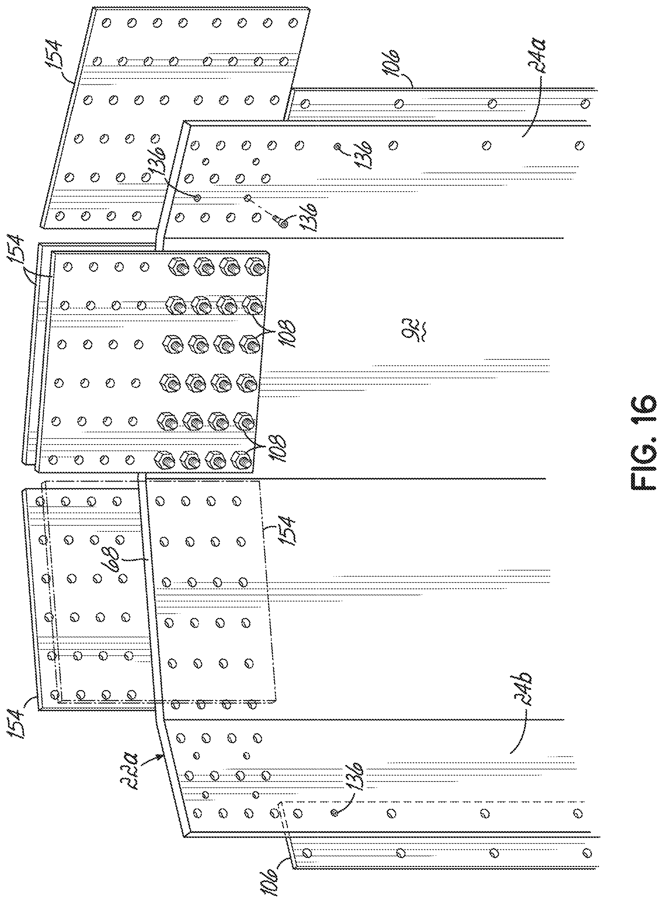

Because the construction of the tower 12 may call for the connection between adjacent tower sections 12a being connected at a horizontal connection joint 156, various aspects of the invention as applied to the vertical connection joints 104 may also be applied to the horizontal connection joints 156. For example, as illustrated in Fig. 16 one or more splice plates 154 may be preinstalled along the upper end 68 of one or more tower segments 22. For example, the one or more splice plates 154 may be preinstalled on the tower segments 22 when the tower segments 22 are in a substantially horizontal orientation adjacent the ground. In this regard, the one or more splice plates 154 may be connected to tower segments 22 when arranged in the one or more stacks 36, for example. Alternatively, the one or more splice plates 154 may be applied to the tower segments 22 at a manufacturing facility and then transported to the installation site 32, such as in containers 34, with the splice plates 154 preinstalled. In one embodiment, if the splice plates 154 are intermediate the vertical side edges 24a, 24b of the tower segment 22, then splice plates 154 may be connected to both the inner surface 92 and outer surface 94 of the tower segment 22. If, however, the splice plates 154 overhang a vertical side edge 24a, 24b, similar to the splice plates 106, then those splice plates 154 may be arranged to be on one of the inner or outer surfaces 92, 94 of the tower segment 22, and an adjacent tower segment may be arranged on the other of the inner or outer surfaces 92, 94 in a manner similar to the splice plates 106 as described above. Accordingly, when two adjacent tower sections 12a are brought together, the splice plates 154 for forming the horizontal connection joint 156 are already positioned on the inside and outside of the sections 12a and technicians may immediately start inserting fasteners 108 to form the connection joint 156.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A method of assembling a wind turbine tower section (12a) from a plurality of tower segments (22), comprising:
providing the plurality of tower segments (22) to a wind turbine installation site (32), each tower segment (22) having an upper edge (68), a lower edge (70), a first side edge (24a), a second side edge (24b), an inner surface (92), and an outer surface (94);
forming a tower section frame assembly (96) by:
arranging a first tower segment (22a) in a substantially horizontal orientation;
arranging a second tower segment (22b) in a substantially horizontal orientation and in spaced relation to the first tower segment (22a) such that:
there are at least two discrete gaps (100) between confronting first and second side edges (24a, 24b) of each side of the first and second tower segments (22a, 22b), the gaps (100) being suitable to be filled with one or more remaining tower segments (22); and
the respective inner surfaces (92) of the first and second tower segments (22a, 22b) face each other; and
connecting at least two tower segments (22a, 22b) with a support beam (72) while the first and second tower segments (22a, 22b) are in the substantially horizontal orientation;
wherein the tower section frame assembly (96) forms a framework on which to further assemble the tower section (12a);
arranging the tower section frame assembly (96) on an assembly stand (42); and attaching the remaining plurality of tower segments (22c-22h) to the tower section frame assembly (96) in the gaps (100) to form the tower section (12a).

2. The method of assembling the wind turbine tower section (12a) of claim 1, wherein arranging the first and second tower segments (22a, 22b) in the substantially horizontal orientation further comprises:
lifting the first tower segment (22a) from one of the side edges (24a, 24b) to orient the first tower segment (22a) in the substantially horizontal position and connecting the first tower segment (22a) to a support stand arrangement (62) to maintain the first tower segment (22a) in the substantially horizontal orientation; and
lifting the second tower segment (22b) from one of the side edges (24a, 24b) to orient the second tower segment (22b) in the substantially horizontal position and connecting the second tower segment (22b) to the support stand arrangement (62) to maintain the second tower segment (22b) in the substantially horizontal orientation.

3. The method of assembling the wind turbine tower section (12a) of claim 1 or claim 2, wherein arranging the tower section frame assembly (96) on the assembly stand (42) further comprises:
reorienting the tower section frame assembly (96) to be in a substantially vertical orientation; and
connecting a lower end of the tower section frame assembly (96) to the assembly stand (42).

4. The method of assembling the wind turbine tower section (12a) of claim 3, further comprising connecting one or more tensioning elements (98) between the tower section frame assembly (96) and the assembly stand (42).

5. The method of assembling the wind turbine tower section (12a) of claim 3 or 4, wherein reorienting the tower section frame assembly (96) further comprises:
lifting an upper end of the tower section frame assembly (96); and
allowing the lower end of the tower section frame assembly (96) to translate as the upper end of the tower section frame assembly (96) is being lifted.

6. The method of assembling the wind turbine tower section (12a) of any of claims 3-5, wherein attaching the remaining plurality of tower segments (22c-22h) to the assembly stand (42) further comprises:
lifting each of the remaining plurality of tower segments (22c-22h) from an upper edge (68) to orient each of the remaining plurality of tower segments (22c-22h) in a substantially vertical orientation and connecting each of the remaining plurality of tower segments (22c-22h) to an adjacent tower segment that forms or is connected to the tower section frame assembly (96).

7. The method of assembling the wind turbine tower section (12a) of any of claims 1-6, further comprising, for each of the plurality of tower segments (22), forming a vertical connection joint (104) between the first side edge (24a) of the tower segment and the second side edge (24b) of an adjacent tower segment to form the tower section (12a), wherein at least one of the vertical connection joints (104) between a tower segment and an adjacent tower segment is formed by a connection method comprising:
connecting a first splice plate (106) to the tower segment so as to extend along the first side edge (24a);
connecting a second splice plate (106) to the adjacent tower segment so as to extend along the second side edge (24b);
arranging the adjacent tower segment relative to the tower segment so that the first side edge (24a) of the tower segment confronts the second side edge (24b) of the adjacent tower segment, wherein the first splice plate (106) and the second splice plate (106) are connected to opposite surfaces (92, 94) of their respective tower segments such that the first splice plate (106) of the tower segment overlaps with the adjacent tower segment, and the second splice plate (106) of the adjacent tower segment overlaps with the tower segment; and
connecting the first splice plate (106) to the adjacent tower segment and connecting the second splice plate (106) to the tower segment to form the at least one connection joint (104).

8. The method of assembling a wind turbine tower section (12a) of claim 7, further comprising:
connecting the first splice plate (106) to the tower segment when the tower segment is in a substantially horizontal orientation;
connecting the second splice plate (106) to the adjacent tower segment when the adjacent tower segment is in a substantially horizontal orientation; and
orienting the tower segment and the adjacent tower segment in a substantially vertical orientation prior to arranging the adjacent tower segment relative to the tower segment.

9. The method of assembling the wind turbine tower section (12a) of claim 7 or 8, further comprising:
connecting the tower segment to an assembly stand (42); and
connecting the adjacent tower segment to the assembly stand (42) after arranging the adjacent tower segment relative to the tower segment.

10. The method of assembling the wind turbine tower section (12a) of any of claims 7-9, further comprising:
providing the plurality of tower segments (22) to a wind turbine installation site (32) as one or more stacks (36) of tower segments (22); and
connecting the first splice plate (106) to the tower segment and connecting the second splice plate (106) to the adjacent tower segment prior to the tower segment and adjacent tower segment being removed from the one or more stacks (36) of tower segments (22).

11. The method of assembling the wind turbine tower section (12a) of claim 10, further comprising:
transporting the one or more stacks (36) of tower segments (22) from a manufacturing facility to the wind turbine installation site (32),
wherein connecting the first splice plate (106) to the first side edge of the tower segment and connecting the second splice plate (106) to the second side edge of the adjacent tower segment are performed prior to transporting the one or more stacks (36) of tower segments (22) to the wind turbine installation site (32).

12. The method of assembling the wind turbine tower section (12a) of any of claims 7-11, further comprising using the first and second splice plates (106) as guides when arranging the adjacent tower segment relative to the tower segment.

13. The method of assembling the wind turbine tower section (12a) of any of claims 7-12, further comprising connecting one or more horizontal splice plates (154) to the tower segment (22) so as to extend along the upper edge (68).

14. The method of assembling the wind turbine tower section (12a) of any of claims 7-13, wherein a plurality of connection joints (104) between a tower segment and an adjacent tower segment is formed by the connection method.

15. A method of assembling a wind turbine tower (12) from a plurality of tower sections (12a), comprising:
assembling a first segmented tower section (12a) from a first plurality of tower segments (22) and a second segmented tower section (12a) from a second plurality of tower segments (22), wherein each of the first and second segmented tower sections (12a) is assembled according to any of claims 1-14; and
connecting the first and second segmented tower sections (12a) end-to-end.

16. The method of assembling the wind turbine tower of claim 15, further comprising connecting one or more tubular tower sections (12b) to the first or second segmented tower section (12a).

## Patentansprüche

1. Verfahren zur Montage eines Windkraftanlagenturmabschnitts (12a) aus einer Vielzahl von Turmsegmenten (22), umfassend:
Bereitstellen der Vielzahl von Turmsegmenten (22) für einen Windkraftanlagen-Installationsort (32), wobei jedes Turmsegment (22) eine Oberkante (68), eine Unterkante (70), eine erste Seitenkante (24a), eine zweite Seitenkante (24b), eine Innenoberfläche (92) und eine Außenoberfläche (94) aufweist;
Bilden einer Turmabschnittsrahmenanordnung (96) durch:
Anordnen eines ersten Turmsegments (22a) in einer im Wesentlichen horizontalen Ausrichtung;
Anordnen eines zweiten Turmsegments (22b) in einer im Wesentlichen horizontalen Ausrichtung und in beabstandeter Beziehung zum ersten Turmsegment (22a), sodass:
mindestens zwei diskrete Lücken (100) zwischen den gegenüberliegenden ersten und zweiten Seitenkanten (24a, 24b) jeder Seite des ersten und zweiten Turmsegments (22a, 22b) vorhanden sind, wobei die Lücken (100) sich dazu eignen, mit einem oder mehreren verbleibenden Turmsegmenten (22) gefüllt zu werden; und
die jeweiligen Innenoberflächen (92) des ersten und zweiten Turmsegments (22a, 22b) einander zugewandt sind; und
Verbinden mindestens zweier Turmsegmente (22a, 22b) mit einem Stützbalken (72), während das erste und das zweite Turmsegment (22a, 22b) in der im Wesentlichen horizontalen Ausrichtung sind;
wobei die Turmabschnittsrahmenanordnung (96) ein Gerüst bildet, auf dem das Turmsegment (12a) weiter zu montieren ist;
Anordnen der Turmabschnittsrahmenanordnung (96) auf einem Anordnungsständer (42); und Befestigen der verbleibenden Vielzahl von Turmsegmenten (22c-22h) an der Turmabschnittsrahmenanordnung (96) in den Lücken (100), um den Turmabschnitt (12a) zu bilden.

2. Verfahren zur Montage des Windkraftanlagenturmabschnitts (12a) nach Anspruch 1, wobei Anordnen des ersten und zweiten Turmsegments (22a, 22b) in der im Wesentlichen horizontalen Ausrichtung weiter umfasst:
Anheben des ersten Turmsegments (22a) von einer der Seitenkanten (24a, 24b), um das erste Turmsegment (22a) in der im Wesentlichen horizontalen Position auszurichten, und Verbinden des ersten Turmsegments (22a) mit einer Stützständeranordnung (62), um das erste Turmsegment (22a) in der im Wesentlichen horizontalen Ausrichtung zu halten; und
Anheben des zweiten Turmsegments (22b) von einer der Seitenkanten (24a, 24b), um das zweite Turmsegment (22b) in der im Wesentlichen horizontalen Position auszurichten, und Verbinden des zweiten Turmsegments (22b) mit der Stützständeranordnung (62), um das zweite Turmsegment (22b) in der im Wesentlichen horizontalen Ausrichtung zu halten.

3. Verfahren zur Montage des Windkraftanlagenturmabschnitts (12a) nach Anspruch 1 oder Anspruch 2, wobei Anordnen der Turmabschnittsrahmenanordnung (96) auf dem Anordnungsständer (42) weiter umfasst:
Neuausrichten der Turmabschnittsrahmenanordnung (96), um in einer im Wesentlichen vertikalen Ausrichtung zu sein; und
Verbinden eines unteren Endes der Turmabschnittsrahmenanordnung (96) mit dem Anordnungsständer (42).

4. Verfahren zur Montage des Windkraftanlagenturmabschnitts (12a) nach Anspruch 3, weiter umfassend Verbinden eines oder mehrerer Spannelemente (98) zwischen der Turmabschnittsrahmenanordnung (96) und dem Anordnungsständer (42).

5. Verfahren zur Montage des Windkraftanlagenturmabschnitts (12a) nach Anspruch 3 oder 4, wobei Neuausrichten der Turmabschnittsrahmenanordnung (96) weiter umfasst:
Anheben eines oberen Endes der Turmabschnittsrahmenanordnung (96); und
Ermöglichen, dass sich das untere Ende der Turmabschnittsrahmenanordnung (96) verschiebt, wenn das obere Ende der Turmabschnittsrahmenanordnung (96) angehoben wird.

6. Verfahren zur Montage des Windkraftanlagenturmabschnitts (12a) nach einem der Ansprüche 3-5, wobei Befestigen der verbleibenden Vielzahl von Turmsegmenten (22c-22h) am Anordnungsständer (42) weiter umfasst:
Anheben jedes der verbleibenden Vielzahl von Turmsegmenten (22c-22h) von einer oberen Kante (68), um jedes der verbleibenden Vielzahl von Turmsegmenten (22c-22h) in einer im Wesentlichen vertikalen Ausrichtung auszurichten, und Verbinden jedes der verbleibenden Vielzahl von Turmsegmenten (22c-22h) mit einem benachbarten Turmsegment, das die Turmabschnittrahmenanordnung (96) bildet oder damit verbunden ist.

7. Verfahren zur Montage des Windkraftanlagenturmabschnitts (12a) nach einem der Ansprüche 1-6, weiter umfassend für jedes der Vielzahl von Turmsegmenten (22), Bilden eines vertikalen Verbindungsgelenks (104) zwischen der ersten Seitenkante (24a) des Turmsegments und der zweiten Seitenkante (24b) eines benachbarten Turmsegments, um den Turmabschnitt (12a) zu bilden, wobei mindestens eines der vertikalen Verbindungsgelenke (104) zwischen einem Turmsegment und einem benachbarten Turmsegment durch ein Verbindungsverfahren gebildet wird, umfassend:
Verbinden einer ersten Spleißplatte (106) mit dem Turmsegment, um sich entlang der ersten Seitenkante (24a) zu erstrecken;
Verbinden einer zweiten Spleißplatte (106) mit dem angrenzenden Turmsegment, um sich entlang der zweiten Seitenkante (24b) zu erstrecken;
Anordnen des benachbarten Turmsegments in Bezug zum Turmsegment sodass die erste Seitenkante (24a) des Turmsegments der zweiten Seitenkante (24b) des benachbarten Turmsegments gegenüberliegt, wobei die erste Spleißplatte (106) und die zweite Spleißplatte (106) mit gegenüberliegenden Oberflächen (92, 94) ihrer jeweiligen Turmsegmente verbunden sind, sodass die erste Spleißplatte (106) des Turmsegments das benachbarte Turmsegment überlappt und die zweite Spleißplatte (106) des benachbarten Turmsegments das Turmsegment überlappt; und
Verbinden der ersten Spleißplatte (106) mit dem benachbarten Turmsegment, und der zweiten Spleißplatte (106) mit dem Turmsegment, um mindestens ein Verbindungsgelenk (104) zu bilden.

8. Verfahren zur Montage eines Windkraftanlagenturmabschnitts (12a) nach Anspruch 7, weiter umfassend:
Verbinden der ersten Spleißplatte (106) mit dem Turmsegment, wenn sich das Turmsegment in einer im Wesentlichen horizontalen Ausrichtung befindet;
Verbinden der zweiten Spleißplatte (106) mit dem benachbarten Turmsegment, wenn sich das benachbarte Turmsegment in einer im Wesentlichen horizontalen Ausrichtung befindet; und
Ausrichten des Turmsegments und des benachbarten Turmsegments in einer im Wesentlichen vertikalen Ausrichtung vor Anordnen des benachbarten Turmsegments in Bezug zum Turmsegment.

9. Verfahren zur Montage des Windkraftanlagenturmabschnitts (12a) nach Anspruch 7 oder 8, weiter umfassend:
Verbinden des Turmsegments mit einem Anordnungsständer (42); und
Verbinden des benachbarten Turmsegments mit dem Anordnungsständer (42) nach Anordnen des benachbarten Turmsegments in Bezug zum Turmsegment.

10. Verfahren zur Montage des Windkraftanlagenturmabschnitts (12a) nach einem der Ansprüche 7-9, weiter umfassend:
Bereitstellen der Vielzahl von Turmsegmenten (22) an einem Windkraftanlagen-Installationsort (32) als ein oder mehrere Stapel (36) von Turmsegmenten (22); und
Verbinden der ersten Spleißplatte (106) mit dem Turmsegment, und Verbinden der zweiten Spleißplatte (106) mit dem benachbarten Turmsegment, bevor das Turmsegment und das benachbarte Turmsegment von dem einen oder mehreren Stapeln (36) von Turmsegmenten (22) entfernt werden.

11. Verfahren zur Montage des Windkraftanlagenturmabschnitts (12a) nach Anspruch 10, weiter umfassend:
Transportieren des einen oder mehrerer Stapel (36) von Turmsegmenten (22) von einer Produktionsstätte zum Windkraftanlagen-Installationsort (32),
wobei Verbinden der ersten Spleißplatte (106) mit der ersten Seitenkante des Turmsegments und Verbinden der zweiten Spleißplatte (106) mit der zweiten Seitenkante des benachbarten Turmsegments vor dem Transportieren des einen oder mehrerer Stapel (36) von Turmsegmenten (22) zum Windkraftanlagen-Installationsort (32) durchgeführt werden.

12. Verfahren zur Montage des Windkraftanlagenturmabschnitts (12a) nach einem der Ansprüche 7-11, weiter umfassend Verwenden der ersten und zweiten Spleißplatte (106) als Führungen beim Anordnen des benachbarten Turmsegments in Bezug zum Turmsegment.

13. Verfahren zur Montage des Windkraftanlagenturmabschnitts (12a) nach einem der Ansprüche 7-12, weiter umfassend Verbinden einer oder mehrerer horizontaler Spleißplatten (154) mit dem Turmsegment (22) um sich entlang der Oberkante (68) zu erstrecken.

14. Verfahren zur Montage des Windkraftanlagenturmabschnitts (12a) nach einem der Ansprüche 7-13, wobei eine Vielzahl von Verbindungsgelenken (104) zwischen einem Turmsegment und einem benachbarten Turmsegment durch das Verbindungsverfahren gebildet wird.

15. Verfahren zur Montage eines Windkraftanlagenturms (12) aus einer Vielzahl von Turmsegmenten (12a), umfassend:
Montieren eines ersten segmentierten Turmabschnitts (12a) aus einer ersten Vielzahl von Turmsegmenten (22) und eines zweiten segmentierten Turmabschnitts (12a) aus einer zweiten Vielzahl von Turmsegmenten (22), wobei jeder des ersten und zweiten segmentierten Turmabschnitts (12a) nach einem der Ansprüch 1 bis 14 montiert wird; und
Verbinden der ersten und zweiten segmentierten Turmabschnitte (12a) mit den Enden aneinander.

16. Verfahren zur Montage des Windkraftanlagenturms nach Anspruch 15, weiter umfassend Verbinden eines oder mehrerer rohrförmiger Turmabschnitte (12b) mit dem ersten oder zweiten segmentierten Turmabschnitt (12a).

## Revendications

1. Procédé d'assemblage d'une section de tour éolienne (12a) à partir d'une pluralité de segments de tour (22), comprenant :
la fourniture de la pluralité de segments de tour (22) à un site d'installation d'éolienne (32), chaque segment de tour (22) présentant un bord supérieur (68), un bord inférieur (70), un premier bord latéral (24a), un second bord latéral (24b), une surface intérieure (92) et une surface extérieure (94) ;
la formation d'un ensemble de cadre de section de tour (96) par :
l'agencement d'un premier segment de tour (22a) dans une orientation sensiblement horizontale ;
l'agencement d'un second segment de tour (22b) dans une orientation sensiblement horizontale et espacé du premier segment de tour (22a) de telle sorte que :
il existe au moins deux espaces distincts (100) entre les premier et second bords latéraux opposés (24a, 24b) de chaque côté des premier et second segments de tour (22a, 22b), les espaces (100) pouvant être comblés par un ou plusieurs segments de tour restants (22) ; et
les surfaces intérieures respectives (92) des premier et second segments de tour (22a, 22b) se font face ; et
la liaison d'au moins deux segments de tour (22a, 22b) avec une poutre de soutien (72) tandis que les premier et second segments de tour (22a, 22b) sont dans l'orientation sensiblement horizontale ;
dans lequel l'ensemble de cadre de section de tour (96) forme une ossature sur laquelle est ensuite assemblée la section de tour (12a) ;
l'agencement de l'ensemble de cadre de section de tour (96) sur un support d'ensemble (42) ; et la fixation de la pluralité restante de segments de tour (22c-22h) à l'ensemble de cadre de section de tour (96) dans les espaces (100) pour former la section de tour (12a).

2. Procédé d'assemblage de la section de tour éolienne (12a) selon la revendication 1, dans lequel l'agencement des premier et second segments de tour (22a, 22b) dans l'orientation sensiblement horizontale comprend en outre :
le levage du premier segment de tour (22a) par l'un des bords latéraux (24a, 24b) afin d'orienter le premier segment de tour (22a) dans une position sensiblement horizontale et la liaison du premier segment de tour (22a) à un agencement de support (62) afin de maintenir le premier segment de tour (22a) dans l'orientation sensiblement horizontale ; et
le levage du second segment de tour (22b) par l'un des bords latéraux (24a, 24b) afin d'orienter le second segment de tour (22b) dans une position sensiblement horizontale et la liaison du second segment de tour (22b) à l'agencement de support (62) afin de maintenir le second segment de tour (22b) dans l'orientation sensiblement horizontale.

3. Procédé d'assemblage de la section de tour éolienne (12a) selon la revendication 1 ou la revendication 2, dans lequel l'agencement de l'ensemble de cadre de section de tour (96) sur le support d'ensemble (42) comprend en outre :
la réorientation de l'ensemble de cadre de section de tour (96) pour qu'il soit dans une orientation sensiblement verticale ; et
la liaison d'une extrémité inférieure de l'ensemble de cadre de section de tour (96) au support d'ensemble (42).

4. Procédé d'assemblage de la section de tour éolienne (12a) selon la revendication 3, comprenant en outre la liaison d'un ou plusieurs éléments tendeurs (98) entre l'ensemble de cadre de section de tour (96) et le support d'ensemble (42).

5. Procédé d'assemblage de la section de tour éolienne (12a) selon la revendication 3 ou 4, dans lequel la réorientation de l'ensemble de cadre de section de tour (96) comprend en outre :
le levage d'une extrémité supérieure de l'ensemble de cadre de section de tour (96) ; et
le fait de laisser l'extrémité inférieure de l'ensemble de cadre de section de tour (96) se déplacer en translation lorsque l'extrémité supérieure de l'ensemble de cadre de section de tour (96) est soulevée.

6. Procédé d'assemblage de la section de tour éolienne (12a) selon l'une quelconque des revendications 3-5, dans lequel la fixation de la pluralité restante de segments de tour (22c-22h) au support d'ensemble (42) comprend en outre :
le levage de chacun de la pluralité restante de segments de tour (22c-22h) à partir d'un bord supérieur (68) pour orienter chacun de la pluralité restante de segments de tour (22c-22h) dans une orientation sensiblement verticale et la liaison de chacun de la pluralité restante de segments de tour (22c-22h) à un segment de tour adjacent qui forme ou est relié à l'ensemble de cadre de section de tour (96).

7. Procédé d'assemblage de la section de tour éolienne (12a) selon l'une quelconque des revendications 1-6, comprenant en outre, pour chacun de la pluralité de segments de tour (22), la formation d'un joint de liaison vertical (104) entre le premier bord latéral (24a) du segment de tour et le second bord latéral (24b) d'un segment de tour adjacent pour former la section de tour (12a), dans lequel au moins un des joints de liaison verticaux (104) entre un segment de tour et un segment de tour adjacent est formé par un procédé de liaison comprenant :
la liaison d'une première plaque d'épissure (106) au segment de tour de manière à s'étendre le long du premier bord latéral (24a) ;
la liaison d'une seconde plaque d'épissure (106) au segment de tour adjacent de manière à s'étendre le long du second bord latéral (24b) ;
l'agencement du segment de tour adjacent par rapport au segment de tour de sorte que le premier bord latéral (24a) du segment de tour soit opposé au second bord latéral (24b) du segment de tour adjacent, dans lequel la première plaque d'épissure (106) et la seconde plaque d'épissure (106) sont reliées aux surfaces opposées (92, 94) de leurs segments de tour respectifs de sorte que la première plaque d'épissure (106) du segment de tour chevauche le segment de tour adjacent, et que la seconde plaque d'épissure (106) du segment de tour adjacent chevauche le segment de tour ; et
la liaison de la première plaque d'épissure (106) au segment de tour adjacent et la liaison de la seconde plaque d'épissure (106) au segment de tour pour former le au moins un joint de liaison (104).

8. Procédé d'assemblage d'une section de tour éolienne (12a) selon la revendication 7, comprenant en outre :
la liaison de la première plaque d'épissure (106) au segment de tour lorsque le segment de tour est dans une orientation sensiblement horizontale ;
la liaison de la seconde plaque d'épissure (106) au segment de tour adjacent lorsque le segment de tour adjacent est dans une orientation sensiblement horizontale ; et
l'orientation du segment de tour et du segment de tour adjacent dans une orientation sensiblement verticale avant d'agencer le segment de tour adjacent par rapport au segment de tour.

9. Procédé d'assemblage de la section de tour éolienne (12a) selon la revendication 7 ou 8, comprenant en outre :
la liaison du segment de tour à un support d'ensemble (42) ; et
la liaison du segment de tour adjacent au support d'ensemble (42) après avoir agencé le segment de tour adjacent par rapport au segment de tour.

10. Procédé d'assemblage de la section de tour éolienne (12a) selon l'une quelconque des revendications 7-9, comprenant en outre :
la fourniture de la pluralité de segments de tour (22) à un site d'installation d'éolienne (32) sous forme d'une ou plusieurs piles (36) de segments de tour (22) ; et
la liaison de la première plaque d'épissure (106) au segment de tour et la liaison de la seconde plaque d'épissure (106) au segment de tour adjacent avant que le segment de tour et le segment de tour adjacent ne soient retirés des une ou plusieurs piles (36) de segments de tour (22).

11. Procédé d'assemblage de la section de tour éolienne (12a) selon la revendication 10, comprenant en outre :
le transport des une ou plusieurs piles (36) de segments de tour (22) d'une usine de fabrication jusqu'au site d'installation d'éolienne (32),
dans lequel la liaison de la première plaque d'épissure (106) au premier bord latéral du segment de tour et la liaison de la seconde plaque d'épissure (106) au second bord latéral du segment de tour adjacent sont effectuées avant le transport des une ou plusieurs piles (36) de segments de tour (22) vers le site d'installation d'éolienne (32).

12. Procédé d'assemblage de la section de tour éolienne (12a) selon l'une quelconque des revendications 7-11, comprenant en outre l'utilisation des première et seconde plaques d'épissure (106) comme guides lors de l'agencement du segment de tour adjacent par rapport au segment de tour.

13. Procédé d'assemblage de la section de tour éolienne (12a) selon l'une quelconque des revendications 7-12, comprenant en outre la liaison d'une ou plusieurs plaques d'épissure horizontales (154) au segment de tour (22) de manière à s'étendre le long du bord supérieur (68).

14. Procédé d'assemblage de la section de tour éolienne (12a) selon l'une quelconque des revendications 7-13, dans lequel une pluralité de joints de liaison (104) entre un segment de tour et un segment de tour adjacent est formée par le procédé de liaison.

15. Procédé d'assemblage d'une tour éolienne (12) à partir d'une pluralité de sections de tour (12a), comprenant :
l'assemblage d'une première section de tour segmentée (12a) à partir d'une première pluralité de segments de tour (22) et d'une seconde section de tour segmentée (12a) à partir d'une seconde pluralité de segments de tour (22), dans lequel chacune des première et seconde sections de tour segmentées (12a) est assemblée selon l'une quelconque des revendications 1-14 ; et
la liaison bout à bout des première et seconde sections de tour segmentées (12a).

16. Procédé d'assemblage de la tour éolienne selon la revendication 15, comprenant en outre la liaison d'une ou plusieurs sections de tour tubulaires (12b) à la première ou seconde section de tour segmentée (12a).
